# EUROPEAN PATENT SPECIFICATION

(11) **EP 4 601 223 B1**
(45) Date of publication and mention of the grant of the patent: **12.08.2026**
(21) Application number: 23881462.8
(22) Date of filing: 31.08.2023
(51) Int. Cl.: H04J 3/06, H04W 56/00, H04N 21/43

(54) **CLOCK SYNCHRONIZATION METHOD AND APPARATUS, SYSTEM, DEVICE, AND STORAGE MEDIUM**
TAKTSYNCHRONISATIONSVERFAHREN UND -VORRICHTUNG, SYSTEM, VORRICHTUNG UND SPEICHERMEDIUM
PROCÉDÉ ET APPAREIL DE SYNCHRONISATION D'HORLOGE, SYSTÈME, DISPOSITIF ET SUPPORT DE STOCKAGE

(30) Priority: 27.10.2022 CN 202211326128
(43) Date of publication of application: 13.08.2025
(73) Proprietor: GUANGDONG OPPO MOBILE TELECOMMUNICATIONS CORP., LTD., Dongguan, Guangdong 523860 (CN)
(72) Inventor: ZHAO, Xu, Dongguan, Guangdong 523860 (CN)
(74) Representative: Penza, Giancarlo
(86) International application number: PCT/CN2023/116293
(87) International publication number: WO 2024/087881

(56) References cited:
- WO-A1-2014/188664
- CN-A- 111 130 676
- CN-A- 111 817 810
- CN-A- 113 422 664
- CN-A- 113 541 838
- CN-A- 115 801 168

## Description

### TECHNICAL FIELD

Embodiments of the present disclosure relate to the field of communication technology, and in particular to a clock synchronization method and system.

### BACKGROUND

For communication between devices, low-latency communication is required in some scenarios. For example, in augmented reality technology and virtual reality technology, low-latency communication between devices is required.

In the related art, the Bluetooth Low Energy (BLE) protocol is used to achieve the low-latency communication. However, packet loss would occur during communication between the devices. Furthermore, in a case of communication among multiple devices, there may be communication interference among the multiple devices, which may affect the use of the devices.

CN 111817810 A discloses a clock synchronization method. A master device and a slave device realize clock synchronization in two steps. In one step, a clock frequency error is corrected. The clock frequency error between the slave device and the master device is detected, and if there is the clock frequency error between the slave device and the master device, the clock frequency error is adjusted to be zero. In other step, the reference time is corrected, in which the moment at which the master device sends a broadcast packet serves as the reference time of the slave device.

WO 2014/188664 A1 discloses a broadcast system whereby a queueing delay is corrected and synchronization precision is improved without causing increased synchronization packet jitter. A broadcast data server functions as a master device which transmits synchronization packets to a plurality of clients to synchronize with the clients as slave devices. The broadcast data server comprises a transmission unit which transmits a plurality of video packets and synchronization packets to the plurality of clients at respectively different transmission intervals. The clients comprise bandwidth estimation units which carry out bandwidth estimations of an IP network on the basis of receiving intervals of the video packets, and time information correction units which correct time information of the synchronization packets on the basis of the result of the bandwidth estimation.

### SUMMARY

The embodiments of the present disclosure provide a clock synchronization method and system as set out in the appended claims.

### BRIEF DESCRIPTION OF THE DRAWINGS

In order to more clearly illustrate the technical solutions in the embodiments of the present disclosure, the drawings required for the description of the embodiments will be briefly introduced blow. Apparently, the drawings described below are only some embodiments of the present disclosure. For those of ordinary skill in the art, other drawings can be obtained based on these drawings without creative work.
FIG. 1 is a schematic diagram illustrating an implementation environment as provided by an exemplary embodiment of the present disclosure.
FIG. 2 is a flow chart of a clock synchronization method provided by an embodiment of the present disclosure.
FIG. 3 is a schematic diagram illustrating signal transmission in a clock synchronization process provided by the embodiment of the present disclosure.
FIG. 4 is a flow chart of a clock synchronization method provided by another embodiment of the present disclosure.
FIG. 5 is a schematic diagram illustrating signal transmission in a clock synchronization process provided by the another embodiment of the present disclosure.
FIG. 6 is a flow chart of a clock synchronization method provided by a further exemplary embodiment of the present disclosure.
FIG. 7 is a schematic diagram illustrating signal transmission in a clock synchronization process provided by the further exemplary embodiment of the present disclosure.
FIG. 8 is a flow chart of a clock synchronization method provided by yet a further exemplary embodiment of the present disclosure.
FIG. 9 is a schematic diagram illustrating signal transmission in a clock synchronization process provided by the yet a further exemplary embodiment of the present disclosure.
FIG. 10 is a schematic diagram illustrating signal frames of a clock synchronization process provided by an exemplary embodiment of the present disclosure.
FIG. 11 is a structural block diagram of a clock synchronization apparatus which is an example useful for understanding the invention but outside the scope of the invention as claimed.
FIG. 12 is a structural block diagram of a clock synchronization apparatus which is an example useful for understanding the invention but outside the scope of the invention as claimed.
FIG. 13 is a structural block diagram of an electronic device which is an example useful for understanding the invention but outside the scope of the invention as claimed.

### DETAILED DESCRIPTION OF PREFERRED EMBODIMENTS

In order to make the objectives, technical solutions and advantages of the present disclosure clearer, the embodiments of the present disclosure will be further described in detail below in conjunction with the accompanying drawings.

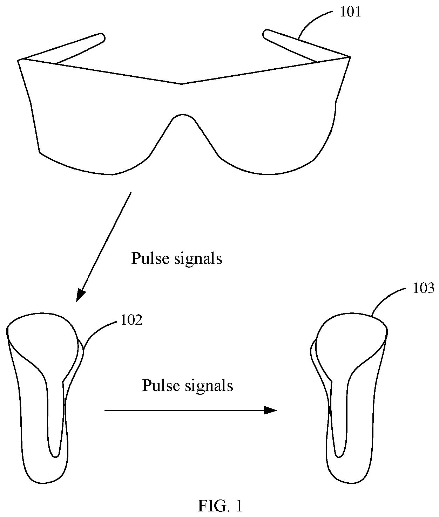

As illustrated in FIG. 1, a schematic diagram of an implementation environment provided by an exemplary embodiment of the present disclosure is shown. The implementation environment includes a master device 101, a first slave device 102, and a second slave device 103.

The master device 101 is an electronic device having a communication function. In some implementations, the master device may be a head-mounted display device. The head-mounted display device may be an augmented reality (AR) device, a virtual reality (VR) device, or an audio-visual device that integrates AR and VR.

The first slave device 102 and the second slave device 103 are electronic devices that may communicate with the master device 101. A communication connection is established between the first slave device 102 and the second slave device 103. When the master device 101 is a head-mounted display device, the first slave device 102 and the second slave device 103 may be control devices for sending instructions to the master device 101.

The master device 101, the first slave device 102, and the second slave device 103 may also be other electronic devices with communication functions, such as smart phone, tablet computer, wearable device, and personal computer, which are not limited in the embodiments.

The communication connections among the master device 101, the first slave device 102 and the second slave device 103 may be established wirelessly, for example, it may be Bluetooth connection, Wireless Fidelity (WiFi) connection, or mobile data network connection, etc., which is not limited in the embodiments.

In the embodiments of the present disclosure, the master device 101 may send adjacent pulse signals to the first slave device 102, so that the first slave device 102 determines a first clock difference therefrom for clock synchronization with the master device 101. Furthermore, the first slave device 102 may send adjacent pulse signals to the second slave device 103, so that the second slave device determines a second clock difference for clock synchronization with the first slave device 102. In this way, progressive clock synchronization among multiple devices is achieved.

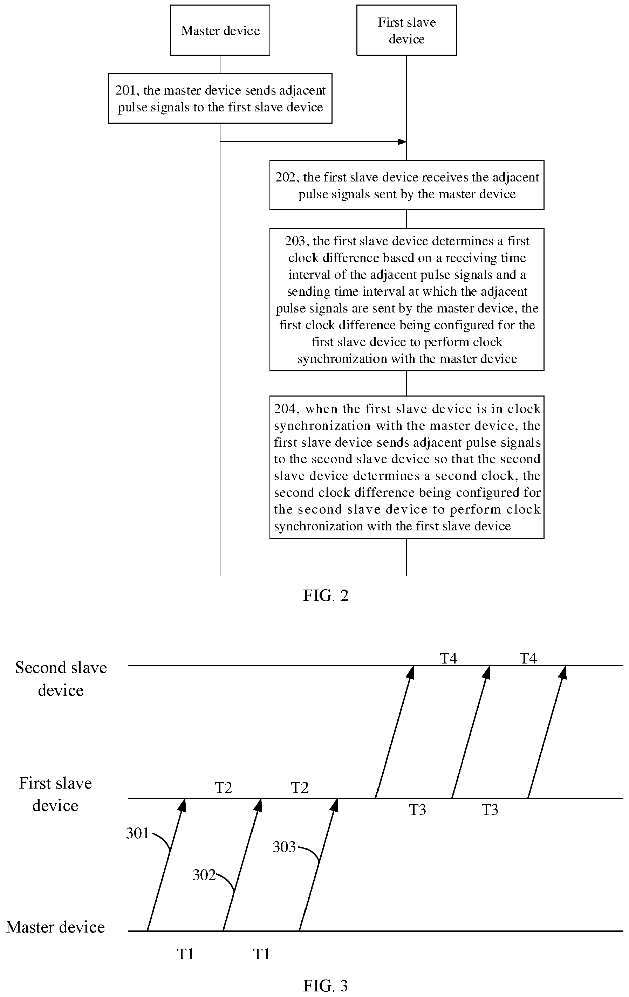

As illustrated in FIG. 2, a flow chart of a clock synchronization method provided by an embodiment of the present disclosure is shown. The method includes operations 201 to 204 as follows.

At 201, the master device sends adjacent pulse signals to the first slave device.

In the embodiments, during the synchronization process, the master device sends pulse signals to the first slave device at intervals, and the master device sends at least one group of adjacent pulse signals to the first slave device. Each group of adjacent pulse signals includes two adjacently sent pulse signals. The pulse signals carry time information based on which the first slave device is enabled to determine a sending time interval. In some implementations, the time information includes at least one of timestamp information and information on the sending time interval. The timestamp information indicates a sending time of the pulse signal.

In some implementations, the master device continuously sends pulse signals to the first slave device. During the continuous sending of the pulse signals, the master device may send the pulse signals at random intervals, or may send the pulse signals at fixed target intervals, which is not limited in the embodiments. Exemplarily, the target interval may be 30 us, and the master device sends pulse signals to the first slave device every 30 us.

At 202, the first slave device receives the adjacent pulse signals sent by the master device.

After the first slave device receives at least one group of adjacent pulse signals sent by the master device, the first slave device may record the receiving times of the at least one group of adjacent pulse signals for clock synchronization.

At 203, the first slave device determines a first clock difference, based on a receiving time interval of the adjacent pulse signals and a sending time interval at which the adjacent pulse signals are sent by the master device, the first clock difference being configured for the first slave device to perform clock synchronization with the master device.

When the master device and the first slave device are in clock synchronization with each other, the time interval at which the first slave device receives the adjacent pulse signals is the same as the time interval at which the master device sends the adjacent pulse signals. When the master device and the first slave device are not in clock synchronization with each other, there is a deviation between the time interval at which the first slave device receives the adjacent pulse signals and the time interval at which the master device sends the adjacent pulse signals. Therefore, in the embodiments of the present disclosure, the difference between the receiving time interval and the sending time interval is used to determine the clock difference between the devices for clock correction.

The receiving time interval and the sending time interval refer to a time interval at which a group of adjacent pulse signals are received at the receiving terminal and a time interval at which the same group of adjacent pulse signals are sent by the sending terminal, respectively.

In one possible implementation, after receiving a pulse signal sent by the master device, the first slave device may record the receiving time thereof and obtain a last receiving time of a last received pulse signal sent by the master device, and thus determine the receiving time interval based on the current receiving time and the last receiving time.

Also, after receiving a pulse signal sent by the master device, the first slave device may obtain the timestamp information in the pulse signal and acquire last timestamp information in the last received pulse signal sent by the master device, and thus determine the sending time interval based on the current timestamp information and the last timestamp information.

Alternatively, when the pulse signal includes information on the sending time interval, the sending time interval at which adjacent pulse signals are sent may be directly acquired from the pulse signal.

After determining the receiving time interval and the sending time interval, the first slave device determines the first clock difference according to a difference between the receiving time interval and the sending time interval.

In order to further improve the accuracy of the first clock difference, the first slave device determines the first clock difference according to an average of differences between multiple receiving time intervals and respective sending time intervals.

Schematically, as illustrated in FIG. 3, when a first pulse signal 301, a second pulse signal 302 and a third pulse signal 303 sent by the master device are received, a receiving time interval T2 may be determined based on the receiving times of the first pulse signal 301 and the second pulse signal 302, a sending time interval T1 may be determined based on the sending times of the first pulse signal 301 and the second pulse signal 302, and a clock difference t1 is determined based on the sending time interval T1 and the receiving time interval T2. A receiving time interval T2 may also be determined based on the receiving times of the second pulse signal 302 and the third pulse signal 303, a sending time interval T1 may also be determined based on the sending times of the second pulse signal 302 and the third pulse signal 303, and a clock difference t2 is determined based on this sending time interval T1 and this receiving time interval T2. Then, the first clock difference is determined based on the average of the clock difference t1 and the clock difference t2.

After determining the first clock difference, the first slave device adjusts a clock parameter(s) thereof according to the first clock difference, and the first slave device gets in clock synchronization with the master device through the adjustment.

At 204, when the first slave device is in clock synchronization with the master device, the first slave device sends adjacent pulse signals to the second slave device so that the second slave device determines a second clock difference, the second clock difference being configured for the second slave device to perform clock synchronization with the first slave device.

During the communication process, in addition to the communication between the master device and the first slave device, there may be communication with the second slave device, where the second slave device is a device different from the first slave device. To enable the second slave device to be in clock synchronization with the master device and the first slave device, the first slave device sends adjacent pulse signals to the second slave device, after the first slave device gets in clock synchronization with the master device using the first clock difference. After receiving the adjacent pulse signals, the second slave device determines a sending time interval at which the adjacent pulse signals are sent by the first slave device and a receiving time interval at which the adjacent pulse signals are received, and then determines the second clock difference based on the receiving time interval and the sending time interval.

After determining the second clock difference, the second slave device adjusts a clock parameter(s) thereof according to the second clock difference, and thus gets in clock synchronization with the first slave device through the adjustment. Since the first slave device is in clock synchronization with the master device, after the second slave device gets in clock synchronization with the first slave device, progressive clock synchronization among the master device, the first slave device and the second slave device are achieved.

Schematically, as illustrated in FIG. 3, the first slave device sends adjacent pulse signals to the second slave device, and the second slave device determines a second clock difference based on a receiving time interval T4 and a sending time interval T3; then, the second slave device adjusts a clock parameter(s) thereof according to the second clock difference, and thus gets in clock synchronization with the first slave device.

To summarize, in the embodiments of the present disclosure, the master device sends adjacent pulse signals to the first slave device, and the first slave device determines the first clock difference between itself and the master device based on the receiving time interval of the adjacent pulse signals and the sending time interval at which the adjacent pulse signals are sent by the master device. Then, the first slave device performs clock adjustment using the first clock difference, and thus gets in clock synchronization with the master device. Furthermore, after the first slave device is in clock synchronization with the master device, the first slave device also sends adjacent pulse signals to the second slave device so that the second slave device gets in clock synchronization with the first slave device, and thus the second slave device is also in clock synchronization with the master device. In this way, progressive clock synchronization is achieved, which reduces interference in the communication process of multiple devices and improves the communication quality.

In some implementations, receiving the adjacent pulse signals sent by the master device includes: receiving the adjacent pulse signals sent by the master device on at least two frequency hopping channels.

In the embodiments, determining the first clock difference based on the receiving time interval of the adjacent pulse signals and the sending time interval at which the adjacent pulse signals are sent by the master device includes: determining time interval differences, based on receiving time intervals of multiple groups of adjacent pulse signals received on the frequency hopping channels and sending time intervals at which the multiple groups of adjacent pulse signals are sent by the master device; and determining the first clock difference based on an average of the time interval differences.

In some implementations, the method further includes: sending adjacent pulse signals to the master device so that the master device determines a third clock difference; receiving the third clock difference sent by the master device; and based on an average of the first clock difference and the third clock difference, adjusting a clock parameter to get in clock synchronization with the master device.

In some implementations, each of the pulse signals includes timestamp information, and determining the first clock difference based on the receiving time interval of the adjacent pulse signals and the sending time interval at which the adjacent pulse signals are sent by the master device, includes: determining a receiving time interval based on receiving times of the adjacent pulse signals; determine the sending time interval based on the timestamp information contained in the adjacent pulse signals; and determining the first clock difference based on a time difference between the receiving time interval and the sending time interval.

In some implementations, the master device is configured to send adjacent pulse signals to the second slave device, so that the second slave device determines a fourth clock difference, and the fourth clock difference is configured for the second slave device to perform clock synchronization with the master device.

In some implementations, the second slave device is further configured to send adjacent pulse signals to the first slave device and the master device, and the master device is configured to determine a fifth clock difference after receiving the adjacent pulse signals.

In some implementations, the method further includes: receiving adjacent pulse signals sent by the second slave device; determining a sixth clock difference based on a receiving time interval at which the adjacent pulse signals are received and a sending time interval at which the adjacent pulse signals are sent by the second slave device; sending adjacent pulse signals to the master device and the second slave device, so that the master device determines a seventh clock difference, and the second slave device determines an eighth clock difference; and based on the individual clock differences, determining a master clock difference with the master device and a slave clock difference with the second slave device.

In some implementations, determining, based on the individual clock differences, the master clock difference with the master device includes: determining an indirect master clock difference between the first slave device and the master device, based on a time difference between the fifth clock difference and the sixth clock difference; and determining the master clock difference, based on an average of the first clock difference, the seventh clock difference, and the indirect master clock difference.

In some implementations, determining, based on the individual clock differences, the slave clock difference with the second slave device includes: determining an indirect slave clock difference between the first slave device and the second slave device, based on a difference between the first clock difference and the fourth clock difference; and determining the slave clock difference, based on an average of the sixth clock difference, the eighth clock difference, and the indirect slave clock difference.

In some implementations, the master device, the first slave device, and the second slave device cyclically send the adjacent pulse signals, and the determining, based on the individual clock differences, the master clock difference with the master device and the slave clock difference with the second slave device, includes: in an n-th round of synchronization, based on the clock differences in the n-th round, determining the master clock difference with the master device and the slave clock difference with the second slave device, where n is a positive integer.

In some implementations, sending the adjacent pulse signals to the second slave device includes: sending, to the second slave device, adjacent pulse signals on at least two frequency hopping channels.

In some implementations, after sending the adjacent pulse signal to the second slave device, the method further includes: receiving adjacent pulse signals sent by the second slave device; determining a ninth clock difference with the second slave device based on the received adjacent pulse signals; and sending the ninth clock difference to the second slave device, so that the second slave device adjusts a clock parameter according to an average of the second clock difference and the ninth clock difference.

In some implementations, the master device is a head-mounted display device, and the first slave device and the second slave device are handle devices.

In some implementations, sending the adjacent pulse signals to the first slave device includes: sending, to the first slave device, adjacent pulse signals on at least two frequency hopping channels. The first slave device is further configured to determine the first clock difference based on an average of multiple time interval differences. The multiple time interval differences are determined based on receiving time intervals at which multiple groups of adjacent pulse signals are received on the frequency hopping channels and sending time intervals at which the multiple groups of adjacent pulse signals are sent by the master device.

In some implementations, the method further includes: receiving adjacent pulse signals sent by the first slave device; determining a third clock difference based on a receiving time interval of the adjacent pulse signals and a sending time interval at which the adjacent pulse signals are sent by the first slave device; sending the third clock difference to the first slave device, so that the first slave device adjusts a clock parameter based on an average of the first clock difference and the third clock difference, and gets in clock synchronization with the master device through the adjustment.

In some implementations, the method further includes: sending adjacent pulse signals to the second slave device so that the second slave device determines a fourth clock difference, the fourth clock difference being configured for the second slave device to perform clock synchronization with the master device.

During the signal transmission process, there may be problems such as channel interference, which may cause error in the clock difference. Therefore, in order to improve the accuracy of the clock difference, a frequency hopping synchronization approach is used to reduce the error of the clock difference. It is illustrated below.

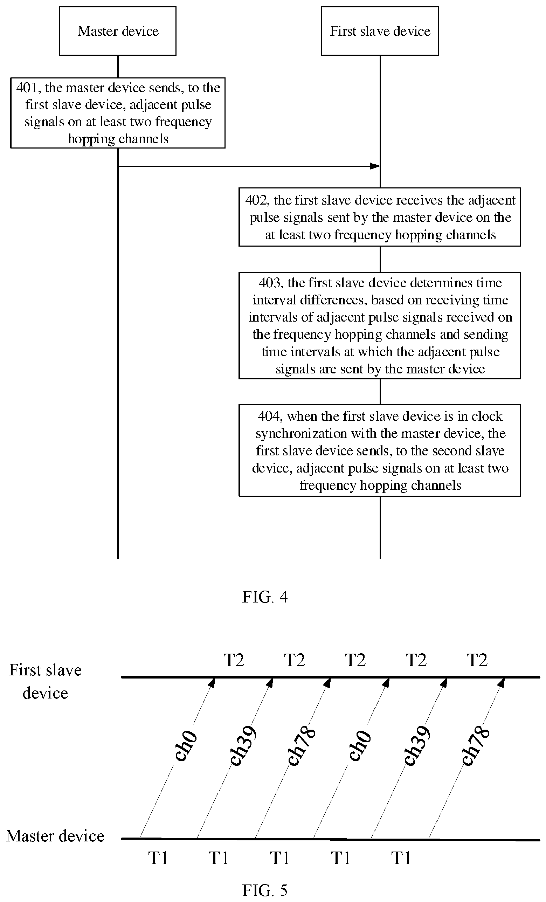

As illustrated in FIG. 4, a flow chart of a clock synchronization method provided by another embodiment of the present disclosure is shown. The method includes operations 401 to 404 as follows.

At 401, the master device sends, to the first slave device, adjacent pulse signals on at least two frequency hopping channels.

During the synchronization process, if the channel sending the pulse signal is interfered, the accuracy of the receiving time interval would be affected, which would in turn affect the accuracy of the clock difference. Therefore, in order to improve the accuracy of the clock difference, the master device sends the pulse signals on at least two frequency hopping channels. The at least two frequency hopping channels are a group of preconfigured channels including channels in different frequency bands. Exemplarily, the at least two frequency hopping channels may include ch0, ch39 and ch78, and the master device may send at least one group of pulse signals on three different working channels.

In a possible implementation, the master device sends pulse signals on the at least two frequency hopping channels in turn, that is, the adjacent pulse signals sent by the master device are transmitted through different channels. Exemplarily, when the at least two frequency hopping channels include ch0, ch39 and ch78, the master device may send pulse signals on ch0, ch39 and ch78 in turn.

Furthermore, the master device may cyclically send pulse signals on the at least two frequency hopping channels. Exemplarily, the master device may cyclically send pulse signals to the first slave device on ch0, ch39, and ch78.

At 402, the first slave device receives the adjacent pulse signals sent by the master device on the at least two frequency hopping channels.

The first slave device receives the adjacent pulse signals sent by the master device on the frequency hopping channels, and thus determines the first clock difference according to the adjacent pulse signals received on different channels, which can reduce the probability of synchronization failure that would be caused due to interference with the synchronization channel.

At 403, the first slave device determines time interval differences, based on receiving time intervals of adjacent pulse signals received on the frequency hopping channels and sending time intervals at which the adjacent pulse signals are sent by the master device.

In a possible implementation, the first slave device determines the receiving time interval according to the receiving times at which adjacent pulse signals are received on two frequency hopping channels.

Exemplarily, as illustrated in FIG. 5, the master device sends pulse signals to the first slave device on ch0, ch39 and ch78 in turn, where the pulse signals transmitted on ch0 and ch39 are adjacent pulse signals, and the pulse signals transmitted on ch39 and ch78 are adjacent pulse signals. The first slave device may determine a receiving time interval T2 based on the receiving times of the adjacent pulse signals received on ch0 and ch39, and may also determine a receiving time interval T2 based on the receiving times of the adjacent pulse signals received on ch39 and ch78.

After determining the receiving time intervals, the first slave device may determine the sending time intervals at which the master device sends the adjacent pulse signals on the two frequency hopping channels. In a possible implementation, the first slave device may calculate the sending time intervals of the received adjacent pulse signals by using the timestamp information included in the adjacent pulse signals.

Schematically, as illustrated in FIG. 5, after the first slave device determines the receiving time interval based on the receiving times of adjacent pulse signals received on ch0 and ch39, it may also determine the sending time interval T1 between the adjacent pulse signals transmitted on ch0 and ch39 based on the timestamp information included in the adjacent pulse signals. After the first slave device determines the receiving time interval based on the receiving times of adjacent pulse signals received on ch39 and ch78, it may also determine the sending time interval T1 between the adjacent pulse signals transmitted on ch39 and ch78 based on the timestamp information included in the adjacent pulse signals.

In a possible implementation, the first slave device determines the first clock difference based on a difference between the determined receiving time interval and respective sending time interval, where the receiving time interval and the respective sending time interval are for a same group of adjacent pulse signals, which is an example useful for understanding the invention but outside the scope of the invention as claimed. For example, as illustrated in FIG. 5, the first clock difference is determined based on the receiving time interval and the sending time interval of adjacent pulse signals transmitted on ch0 and ch39, or the first clock difference may also be determined based on the receiving time interval and the sending time interval of adjacent pulse signals transmitted on ch39 and ch78.

To improve the accuracy of the clock difference, the first slave device determines the first clock difference based on differences, i.e., time interval differences, between multiple receiving time intervals and their respective sending time intervals. In the embodiments, the first slave device determines the first clock difference based on an average of multiple time interval differences, in which each time interval difference is determined based on the receiving time interval and its respective sending time interval of a same group of adjacent pulse signals, and different groups of adjacent pulse signals are transmitted on different adjacent frequency hopping channels.

When the master device sends pulse signals in turn on the frequency hopping channels, the first slave device receives multiple groups of adjacent pulse signals. Thereafter, the time interval differences are determined based on the receiving time intervals and the sending time intervals of the multiple groups of adjacent pulse signals. Finally, the first clock difference is determined based on the average of the multiple time interval differences.

Schematically, as illustrated in FIG. 5, the first slave device may determine the first clock difference based on the average of a time difference t1 and a time difference t2, where the time difference t1 is determined based on the receiving time interval and the sending time interval of adjacent pulse signals transmitted on ch0 and ch39, and the time difference t2 is determined based on the receiving time interval and the sending time interval of adjacent pulse signals transmitted on ch39 and ch78.

Alternatively, it may be further determined based on the time interval differences corresponding to multiple groups of pulse signals sent cyclically. Exemplarily, as illustrated in FIG. 5, the first slave device may determine, as the first clock difference, an average of time interval differences corresponding to multiple groups of adjacent pulse signals that are cyclically sent by the master device twice on ch0, ch39, and ch78.

At 404, when the first slave device is in clock synchronization with the master device, the first slave device sends, to the second slave device, adjacent pulse signals on at least two frequency hopping channels.

In a possible implementation, when the first slave device sends adjacent pulse signals to the second slave device, it may also send the adjacent pulse signals on at least two frequency hopping channels, so that the second slave device determines the second clock difference based on the receiving time interval and the sending time interval of adjacent pulse signals received on different channels, thereby reducing the error of the second clock difference.

In the embodiment, during the synchronization process among devices, the adjacent pulse signals are sent on the frequency hopping channels, so that the clock difference between the devices are determined based on the receiving time interval and the sending time interval of the adjacent pulse signals received on different channels. This can reduce the probability of synchronization failure that would be caused due to channel interference, and improve the success rate of synchronization.

During the signal transmission process, there may be problems such as electromagnetic wave transmission, reflection and multipath, which may cause error in the clock difference. Therefore, in order to improve the accuracy of the clock difference, a two-way synchronization approach may also be used to reduce the error of the clock difference. It is illustrated below by means of exemplary embodiments.

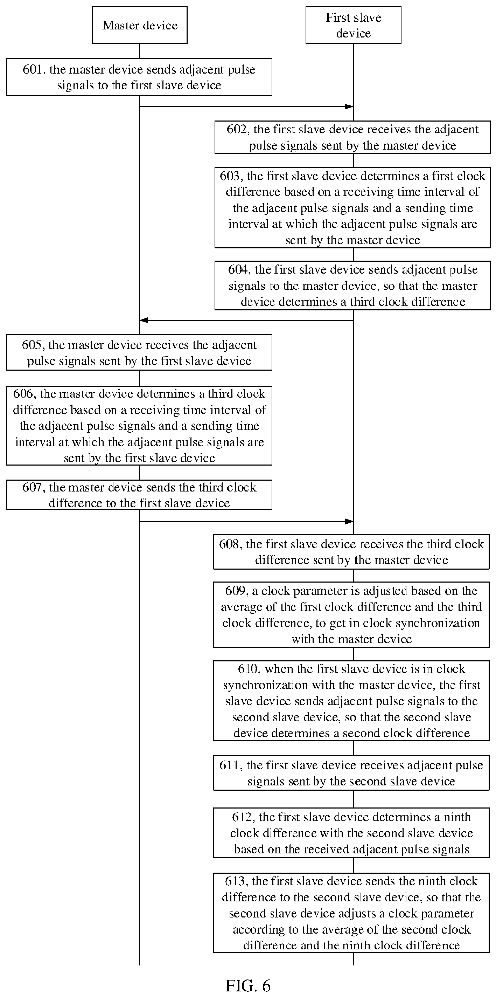

As illustrated in FIG. 6, a flowchart of a clock synchronization method provided by a further exemplary embodiment of the present disclosure is shown. The present embodiment is illustrated under a case where the method is applied to the first slave device. The method includes operations 601 to 613 as follows.

At 601, the master device sends adjacent pulse signals to the first slave device.

At 602, the first slave device receives the adjacent pulse signals sent by the master device.

The implementation of operations 601-602 may refer to the above operations 201-202, which will not be described in detail in this embodiment.

At 603, the first slave device determines a first clock difference based on a receiving time interval of the adjacent pulse signals and a sending time interval at which the adjacent pulse signals are sent by the master device.

In a possible implementation, the first slave device determining the first clock difference may include operations 603a to 603c as follows.

At 603a, the receiving time interval is determined based on the receiving times of the adjacent pulse signals.

After the first slave device receives a pulse signal, the first slave device may determine receiving times of two adjacent pulse signals based on the current receiving time and a receiving time of a last received pulse signal, and determine the receiving time interval based on the receiving times.

At 603b, the sending time interval is determined based on the timestamp information included in the adjacent pulse signals.

The first slave device may also determine the sending time interval between two adjacent pulse signals sent by the master device, based on the timestamp information included in each of the two adjacent pulse signals.

At 603c, the first clock difference is determined based on the time difference between the receiving time interval and the sending time interval.

After determining the receiving time interval and the sending time interval, the first slave device may use the time difference between the two time intervals to determine the first clock difference. The receiving time interval and the sending time interval are determined respectively based on the receiving times and sending times of a same group of pulse signals.

In the embodiments, the first slave device determines the first clock difference as an average of clock differences determined from multiple groups of adjacent pulse signals, thereby improving the accuracy of the first clock difference.

At 604, the first slave device sends adjacent pulse signals to the master device, so that the master device determines a third clock difference.

In order to reduce errors caused by electromagnetic wave transmission, reflection, multipath and other problems during a process that the master device transmits pulse signals to the first slave device, in a possible implementation, the first slave device may send at least one group of adjacent pulse signals to the master device, so that the master device determines a clock difference between the master device and the first slave device based on the received adjacent pulse signals. Since the pulse signals sent from the master device to the first slave device and the pulse signals sent from the first slave device to the master device are not transmitted through a same physical path, synchronization errors can be reduced.

At 605, the master device receives the adjacent pulse signals sent by the first slave device.

At 606, the master device determines a third clock difference based on a receiving time interval of the adjacent pulse signals and a sending time interval at which the adjacent pulse signals are sent by the first slave device.

After the master device receives the adjacent pulse signals sent by the first slave device, the master device determines the third clock difference based on the receiving time interval of the adjacent pulse signals and the sending time interval of the adjacent pulse signals. That is, the master device calculates a clock difference between itself and the first slave device, to realize a two-way synchronization process.

The process that the master device determines the third clock difference may refer to the process that the first slave device determines the first clock difference, which will not be described in detail in this embodiment.

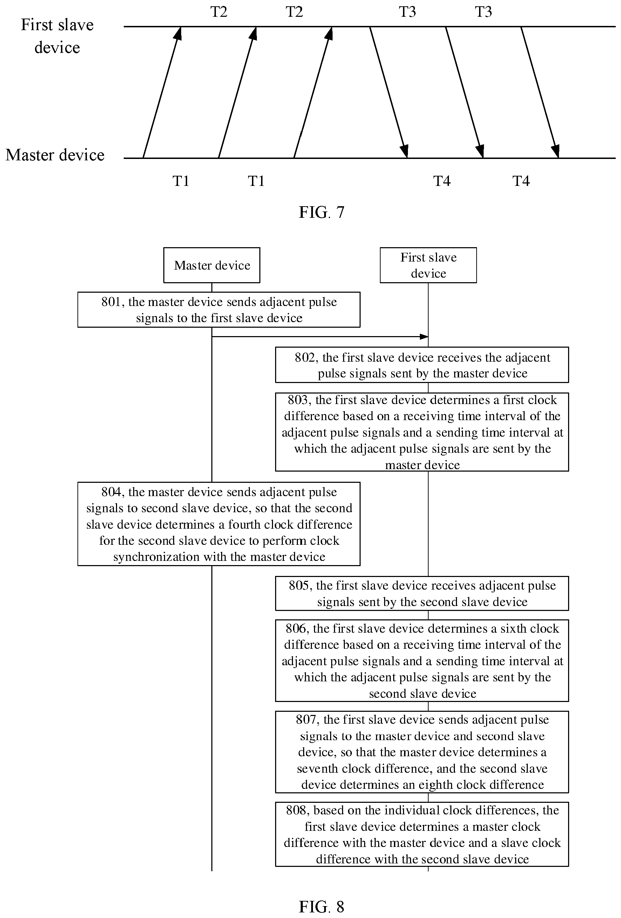

Schematically, as illustrated in FIG. 7, the master device sends adjacent pulse signals to the first slave device, and the first slave device may determine the first clock difference based on the receiving time interval T2 and the sending time interval T1. The first slave device may also send adjacent pulse signals to the master device, and the master device may determine the third clock difference based on the receiving time interval T4 and the sending time interval T3.

At 607, the master device sends the third clock difference to the first slave device.

After the master device determines the third clock difference, the master device may adjust its own clock parameter(s) according to the third clock difference, and thus get in clock synchronization with the first slave device. Alternatively, the master device may also send the third clock difference to the first slave device, and the first slave device determines a clock difference between itself and the master device based on the first clock difference determined by the first slave device and the third clock difference sent by the master device, to improve the accuracy of the clock difference.

It is notable that this embodiment only describes the manner in which the master device sends adjacent pulse signals to make the first slave device synchronized and the first slave device sends adjacent pulse signals to make the master device synchronized, and does not limit the timing of the sending of the pulse signals by the master device and the sending of the pulse signals by the first slave device.

In a possible implementation, the master device sends the third clock difference to the first slave device by sending a pulse signal including the third clock difference.

At 608, the first slave device receives the third clock difference sent by the master device.

The first slave device may determine the third clock difference from the time information included in the received pulse signal.

At 609, a clock parameter is adjusted based on the average of the first clock difference and the third clock difference, to get in clock synchronization with the master device.

In a possible implementation, after receiving the third clock difference sent by the master device, the first slave device determines the average of the first clock difference and the third clock difference as the clock difference between the first slave device and the master device, and adjusts the clock parameter(s) thereof according to the clock difference to get in clock synchronization with the master device.

In the above embodiment, during the synchronization process between the first slave device and the master device, frequency hopping synchronization or two-way synchronization may be used to reduce the synchronization error. In another possible implementation, frequency hopping synchronization and two-way synchronization may be used simultaneously to improve the synchronization accuracy.

The master device sends, to the first slave device, adjacent pulse signals on the frequency hopping channels, so that the first slave device determines the first clock difference between itself and the master device based on adjacent pulse signals received on the frequency hopping channels. Thereafter, the first slave device may also send, to the master device, adjacent pulse signals on the frequency hopping channels, so that the master device determines the third clock difference between itself and the first slave device based on adjacent pulse signals received on the frequency hopping channels. The frequency hopping channels through which the master device sends the adjacent pulse signals may be the same as or different from the frequency hopping channels through which the first slave device sends the adjacent pulse signals, which is not limited in the embodiments.

The frequency hopping synchronization and two-way synchronization can reduce synchronization errors that would be caused by channel interference and electromagnetic wave transmission problems.

At 610, when the first slave device is in clock synchronization with the master device, the first slave device sends adjacent pulse signals to the second slave device, so that the second slave device determines a second clock difference.

After adjusting the clock parameter(s) to get in synchronization with the master device, the first slave device sends adjacent pulse signals to the second slave device to enable the second slave device to determine the second clock difference between the second slave device and the first slave device.

At 611, the first slave device receives adjacent pulse signals sent by the second slave device.

Furthermore, the second slave device may also send at least one group of adjacent pulse signals to the first slave device, so that the first slave device determines a clock difference between itself and the second slave device.

At 612, the first slave device determines a ninth clock difference with the second slave device based on the received adjacent pulse signals.

The first slave device determines the ninth clock difference between itself and the second slave device based on a sending time interval at which the adjacent pulse signals are sent by the second slave device and a receiving time interval at which the adjacent pulse signals are received. Thereafter, the ninth clock difference may be sent to the second slave device to improve the accuracy of the clock difference determined by the second slave device.

At 613, the first slave device sends the ninth clock difference to the second slave device, so that the second slave device adjusts the clock parameter according to the average of the second clock difference and the ninth clock difference.

After the first slave device sends the ninth clock difference to the second slave device, the second slave device determines the clock difference between itself and the first slave device based on the average of the second clock difference and the ninth clock difference, and then adjusts the clock parameter(s) thereof. A two-way synchronization process is implemented between the first slave device and the second slave device, thereby reducing the synchronization errors.

In the embodiment, bidirectional synchronization is achieved through a bidirectional transmission process in which the master device sends adjacent pulse signals to the first slave device and the first slave device sends adjacent pulse signals to the master device, thereby reducing the impact of electromagnetic wave transmission, reflection and multipath during signal transmission on synchronization, improving the accuracy of clock synchronization, and thus improving the synchronization quality.

In the above embodiments, the clock synchronization among the master device, the first slave device and the second slave device is achieved through progressive synchronization. When the master device is able to communicate with the second slave device, the second slave device may directly determine the clock difference based on the pulse signals sent by the master device to achieve the clock synchronization. It is illustrated below by means of exemplary embodiments

As illustrated in FIG. 8, a flowchart of a clock synchronization method provided by yet a further exemplary embodiment of the present disclosure is shown. The present embodiment is illustrated under a case where the method is applied to the first slave device. The method includes operations 801 to 808 as follows.

At 801, the master device sends adjacent pulse signals to the first slave device.

At 802, the first slave device receives the adjacent pulse signals sent by the master device.

At 803, the first slave device determines a first clock difference based on a receiving time interval of the adjacent pulse signals and a sending time interval at which the adjacent pulse signals are sent by the master device.

The implementation of operations 801-803 may refer to the above operations 201-203, which will not be described in detail in this embodiment.

At 804, the master device sends adjacent pulse signals to the second slave device, so that the second slave device determines a fourth clock difference, the fourth clock difference being configured for the second slave device to perform clock synchronization with the master device.

In some implementations, when the master device and the second slave device are in a state in which the communication therebetween is unavailable, in order to achieve clock synchronization among the master device, the first slave device and the second slave device, progressive clock synchronization is used. That is, after the first slave device is in clock synchronization with the master device, the first slave device sends adjacent pulse signals to the second slave device so that the second slave device gets in clock synchronization with the first slave device. When the second slave device is outside the communication range of the master device, or when the received signal strength of the signal that is received by the second slave device and sent by the master device is lower than a strength threshold, it is determined that the master device and the second slave device are in the state in which the communication therebetween is unavailable.

When the master device and the second slave device are in a state in which the communication therebetween is available, that is, when the second slave device is within the communication range of the master device, or the received signal strength of the signal that is received by the second slave device and sent by the master device is higher than the strength threshold, the communication between the master device and the second slave device may be used to achieve clock synchronization between the master device and the second slave device.

In a possible implementation, the master device sends adjacent pulse signals to the second slave device, so that the second slave device determines the fourth clock difference, the fourth clock difference being configured for the second slave device to perform clock synchronization with the master device.

That is, the master device sends adjacent pulse signals to the second slave device, and the second slave device determines the fourth clock difference between itself and the master device based on a receiving time interval and a sending time interval of the adjacent pulse signals, and adjusts the clock parameter(s) thereof according to the fourth clock difference to get in clock synchronization with the master device.

At 805, the first slave device receives adjacent pulse signals sent by the second slave device.

In the above implementation, when the master device and the second slave device are in the state in which the communication therebetween is available, the master device may send adjacent pulse signals to the first slave device and the second slave device, thereby achieving clock synchronization among the master device, the first slave device and the second slave device. To further improve the accuracy of clock synchronization, in a possible implementation, adjacent pulse signals may be sent by the first slave device and the second slave device, so as to determine the clock differences among the devices according to the transmission processes of pulse signals in different directions.

In some implementations, the second slave device is further configured to send adjacent pulse signals to the first slave device and the master device, and the master device determines a fifth clock difference after receiving the adjacent pulse signals.

The second slave device may send pulse signals to each of the master device and the first slave device at intervals. The master device may determine the fifth clock difference based on the receiving time interval and the sending time interval, and the fifth clock difference is a clock difference between the master device and the second slave device.

The first slave device may receive the pulse signals sent by the second slave device at intervals, and may determine the clock difference between the first slave device and the second slave device according to the received adjacent pulse signals.

At 806, the first slave device determines a sixth clock difference based on a receiving time interval at which the adjacent pulse signals are received and a sending time interval at which the adjacent pulse signals are sent by the second slave device.

In a possible implementation, the first slave device determines the receiving time interval based on the receiving times of the adjacent pulse signals, determines the sending time interval based on timestamp information carried in the adjacent pulse signals, and then obtains the sixth clock difference with the second slave device.

At 807, the first slave device sends adjacent pulse signals to the master device and the second slave device, so that the master device determines a seventh clock difference, and the second slave device determines an eighth clock difference.

The first slave device may also send adjacent pulse signals to the master device and the second slave device. After the master device receives the adjacent pulse signals sent by the first slave device, the master device may determine the seventh clock difference between itself and the first slave device based on the receiving time interval and the sending time interval. After the second slave device receives the adjacent pulse signals sent by the first slave device, the second slave device may determine the eighth clock difference between itself and the first slave device based on the receiving time interval and the sending time interval.

At 808, based on the individual clock differences, the first slave device determines a master clock difference with the master device and a slave clock difference with the second slave device.

In the above process, each of the master device, the first slave device and the second slave device sends pulse signals to other devices, and multiple clock differences among the devices may be obtained. The first slave device may determine the master clock difference with the master device based on the multiple clock differences, and may determine the slave clock difference with the second slave device based on the multiple clock differences. The process of determining the master clock difference with the master device may include operations 1 and 2 as follows.

Operation 1, an indirect master clock difference between the first slave device and the master device is determined based on a difference between the fifth clock difference and the sixth clock difference.

The fifth clock difference is a clock difference between the master device and the second slave device that is determined by the master device after the second slave device sends adjacent pulse signals to the master device. The sixth clock difference is a clock difference between the first slave device and the second slave device that is determined by the first slave device after the second slave device sends adjacent pulse signals to the first slave device. The first slave device may acquire the fifth clock difference from the master device.

Since the fifth clock difference is the clock difference between the master device and the second slave device, and the sixth clock difference is the clock difference between the first slave device and the second slave device, the first slave device may determine the indirect master clock difference with the master device based on the difference between the fifth clock difference and the sixth clock difference.

Operation 2, the master clock difference is determined based on an average of the first clock difference, the seventh clock difference and the indirect master clock difference.

Since the master device sends adjacent pulse signals to the first slave device, the first slave device may directly determine the clock difference between itself and the master device. Since the first slave device also sends adjacent pulse signals to the master device, the master device may directly determine the clock difference between itself and the first slave device.

In a possible implementation, the first slave device may determine the clock difference with the master device as the average of clock differences with the master device directly determined based on the pulse signal transmission among the devices and clock differences with the master device indirectly determined based on the pulse signal transmission among the devices.

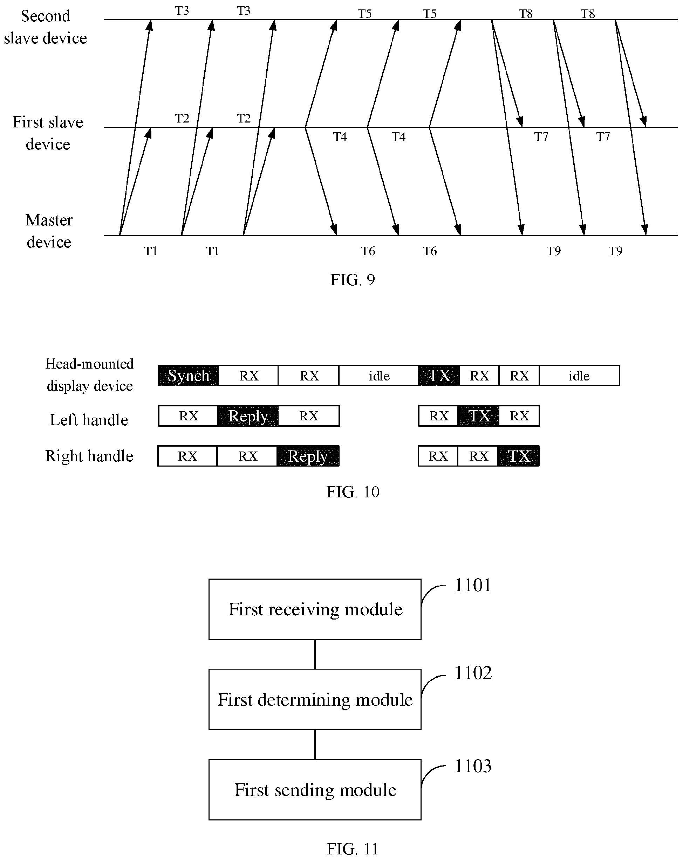

Schematically, as illustrated in FIG. 9, the master device may send adjacent pulse signals to the first slave device and the second slave device, the first slave device may determine the first clock difference based on the receiving time interval T2 and the sending time interval T1, and the second slave device may determine the fourth clock difference based on the receiving time interval T3 and the sending time interval T1. The first slave device may send adjacent pulse signals to the master device and the second slave device, the master device may determine the seventh clock difference based on the receiving time interval T6 and the sending time interval T4, and the second slave device may determine the eighth clock difference based on the receiving time interval T5 and the sending time interval T4. The second slave device may send adjacent pulse signals to the master device and the first slave device, the master device may determine the fifth clock difference based on the receiving time interval T9 and the sending time interval T8, and the first slave device may determine the sixth clock difference based on the receiving time interval T7 and the sending time interval T8. Afterwards, the first slave device may determine the clock difference between the first slave device and the master device, based on the first clock difference determined by the first slave device, the seventh clock difference determined by the master device, and the indirect master clock difference indirectly determined based on the fifth clock difference and the sixth clock difference.

The process of determining the slave clock difference with the second salve device may include operations 1 and 2 as follows. Operation 1, an indirect slave clock difference between the first slave device and the second slave device is determined based on a difference between the first clock difference and the fourth clock difference.

The first clock difference is a clock difference between the first slave device and the master device that is determined by the first slave device after the master device sends adjacent pulse signals to the first slave device. The fourth clock difference is a clock difference between the second slave device and the master device that is determined by the second slave device after the master device sends adjacent pulse signals to the second slave device. That is, the first clock difference and the fourth clock difference are clock differences of different slave devices relative to the master device. Therefore, the indirect slave clock difference between the first slave device and the second slave device may be determined based on the difference between the first clock difference and the fourth clock difference.

Operation 2, the slave clock difference is determined based on an average of the sixth clock difference, the eighth clock difference and the indirect slave clock difference.

The sixth clock difference and the eighth clock difference are clock differences directly determined according to the transmission process of pulse signals between the first slave device and the second slave device. The first slave device may determine the slave clock difference between the first slave device and the second slave device based on the average of the sixth clock difference, the eighth clock difference and the indirect slave clock difference.

After the first slave device gets in clock synchronization with the master device using the master clock difference, the first slave device may also send the slave clock difference to the second slave device, so that the second slave device adjusts the clock parameter(s) thereof according to the slave clock difference and gets in clock synchronization with the first slave device, thereby achieving clock synchronization among the multiple devices.

In another possible implementation, the first slave device does not need to determine the slave clock difference. The second slave device determines a master clock difference between itself and the master device based on the fourth clock difference, the fifth clock difference, and an indirect master clock difference determined based on the difference between the seventh clock difference and the eighth clock difference, and adjusts the clock parameter(s) thereof based on the determined master clock difference. That is, each slave device determines the clock difference between itself and the master device according to the clock differences obtained based on the pulse signals sent in turn among the devices, and gets in clock synchronization with the master device.

In a possible implementation, the master device, the first slave device, and the second slave device send pulse signals cyclically.

In an n-th round of synchronization, based on the individual clock differences in the n-th round, the master clock difference with the master device and the slave clock difference with the second slave device are determined, where n is a positive integer.

The master device, the first slave device and the second slave device send pulse signals cyclically to achieve cyclic synchronization. During each round of synchronization, the master device, the first slave device, and the second slave device send adjacent pulse signals in turn. In the n-th round of synchronization, each of the master device, the first slave device and the second slave device sends adjacent pulse signals for the n-th time, and the clock differences of the n-th round are determined according to the adjacent pulse signals sent by each device for the n-th time, so as to perform clock synchronization according to the clock difference of the n-th round.

It is notable that, in each round of synchronization, the sending timing that the master device, the first slave device and the second slave device each send pulse signals to the other two devices is not limited in the embodiments, as long as each of the master device, the first slave device and the second slave device sends pulse signals to the other two devices.

In the embodiment, when the master device and the second slave device are in the state in which the communication therebetween is available, the master device may send adjacent pulse signals to the second slave device, so that the second slave device may directly perform clock synchronization based on the clock difference with the master device, thereby improving the accuracy of clock synchronization.

Furthermore, the master device, the first slave device and the second slave device may send pulse signals in turn, and multiple groups of clock differences among the three devices may be obtained based on the cyclically sent pulse signals, thereby reducing the error of the clock differences and enabling more accurate clock synchronization.

In some implementations, the methods provided in the embodiments of the present disclosure may be applied to the communication process of an extended reality (XR) device, where the XR device includes an AR device and a VR device. For example, in a case where it is applied to a VR device, the master device is a head-mounted display device, and the first slave device and the second slave device are handle devices. As illustrated in FIG. 10, the head-mounted display device sends a synchronization signal (Synch) which is then received by the left handle and the right handle. Afterwards, the left handle makes a response (Reply) to the synchronization signal, which is received by the head-mounted display device and the right handle. The right handle makes a response (Reply) to the synchronization signal, which is received by the head-mounted display device and the left handle. Each synchronization frame carries time parameter information, and the time parameter information includes for example timestamp information and time interval information, so that the clock differences among the three devices may be determined based on the time parameter information, and the left handle and the right handle are in clock synchronization with the head-mounted display device. Schematically, in each round of synch, receiving (RX), and sending (TX) processes, the frame length is about 20 bytes and the duration is 10 us. In the case of 5 channels, each round of 6 frames and 2 idle slots takes 400us, which can save time and improve the communication efficiency.

In some implementations, the head-mounted display device and the handle devices may be synchronized first and then communicate with each other; alternatively, they may be synchronized in real time during the communication process, which is not limited in the embodiments of the present disclosure.

As illustrated in FIG. 11, a structural block diagram of a clock synchronization apparatus is shown, which is an example useful for understanding the invention but outside the scope of the invention as claimed. The apparatus may include a first receiving module 1101, a first determining module 1102, and a first sending module 1103.

The first receiving module 1101 is configured to receive adjacent pulse signals sent by a master device.

The first determining module 1102 is configured to determine a first clock difference based on a receiving time interval of the adjacent pulse signals and a sending time interval at which the adjacent pulse signals are sent by the master device, the first clock difference being configured for the first slave device to perform clock synchronization with the master device.

The first sending module 1103 is configured to, when the first slave device is in clock synchronization with the master device, send adjacent pulse signals to a second slave device so that the second slave device determines a second clock difference, the second clock difference being configured for the second slave device to perform clock synchronization with the first slave device.

In some implementations, the first receiving module 1101 is further configured to receive adjacent pulse signals sent by the master device on at least two frequency hopping channels.

The first determining module 1102 is further configured to: determine time interval differences, based on receiving time intervals of the adjacent pulse signals received on the frequency hopping channels and sending time intervals at which the adjacent pulse signals are sent by the master device; and determine the first clock difference based on an average of the time interval differences.

In some implementations, the first sending module 1103 is further configured to send adjacent pulse signals to the master device, so that the master device determines a third clock difference.

The first receiving module 1101 is further configured to receive the third clock difference sent by the master device.

The apparatus also includes a clock adjustment module configured to adjust a clock parameter based on an average of the first clock difference and the third clock difference, so as to get in clock synchronization with the master device.

In some implementations, the pulse signal includes timestamp information.

The first determining module 1102 is further configured to: determine the receiving time interval based on receiving times of the adjacent pulse signals; determine the sending time interval based on the timestamp information included in the adjacent pulse signals; and determine the first clock difference based on a time difference between the receiving time interval and the sending time interval.

In some implementations, the master device is configured to send adjacent pulse signals to the second slave device, so that the second slave device determines a fourth clock difference, the fourth clock difference being configured for the second slave device to perform clock synchronization with the master device.

In some implementations, the second slave device is further configured to send adjacent pulse signals to the first slave device and the master device, and the master device is configured to determine a fifth clock difference after receiving the adjacent pulse signals.

In some implementations, the first receiving module 1101 is further configured to receive the adjacent pulse signals sent by the second slave device.

The first determining module 1102 is further configured to determine a sixth clock difference based on a receiving time interval of the adjacent pulse signals and a sending time interval at which the adjacent pulse signals are sent by the second slave device.

The first sending module 1103 is further configured to send adjacent pulse signals to the master device and the second slave device, so that the master device determines a seventh clock difference, and the second slave device determines an eighth clock difference.

The first determining module 1102 is further configured to determine, based on the individual clock differences, a master clock difference with the master device and a slave clock difference with the second slave device.

In some implementations, the first determining module 1102 is further configured to: determine an indirect master clock difference between the first slave device and the master device based on a time difference between the fifth clock difference and the sixth clock difference; determine the master clock difference based on an average of the first clock difference, the seventh clock difference and the indirect master clock difference; determine an indirect slave clock difference between the first slave device and the second slave device based on a difference between the first clock difference and the fourth clock difference; and determine the slave clock difference based on an average of the sixth clock difference, the eighth clock difference, and the indirect slave clock difference.

In some implementations, the master device, the first slave device, and the second slave device cyclically send the adjacent pulse signals.

The first determining module 1102 is further configured to: in an n-th round of synchronization, based on the clock differences in the n-th round, determine the master clock difference with the master device and the slave clock difference with the second slave device, where n is a positive integer.

In some implementations, the first sending module 1103 is further configured to send, to the second slave device, the adjacent pulse signals on at least two frequency hopping channels.

In some implementations, the first receiving module 1101 is further configured to receive adjacent pulse signals sent by the second slave device.

The first determining module 1102 is further configured to determine a ninth clock difference between the first slave device and the second slave device based on the received adjacent pulse signals.

The first sending module 1103 is further configured to send the ninth clock difference to the second slave device, so that the second slave device adjusts a clock parameter according to an average of the second clock difference and the ninth clock difference.

In some implementations, the master device is a head-mounted display device, and the first slave device and the second slave device are handle devices.

In the embodiment of the present disclosure, the master device may send adjacent pulse signals to the first slave device, and the first slave device determines the first clock difference between itself and the master device based on the receiving time interval of the adjacent pulse signals and the sending time interval at which the pulse signals are sent by the master device. Then, the first slave device may use the first clock difference to perform clock adjustment and thus get in clock synchronization with the master device. Furthermore, after the first slave device is in clock synchronization with the master device, the first slave device may also send adjacent pulse signals to the second slave device so that the second slave device gets in clock synchronization with the first slave device, and the second slave device is also in clock synchronization with the master device. In this way, progressive clock synchronization is enabled, which reduces interference in the communication process of multiple devices, and improves the communication quality.

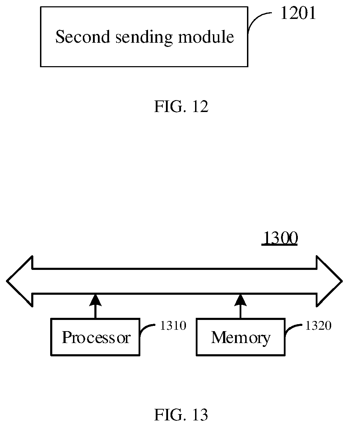

As illustrated in FIG. 12, a structural block diagram of a clock synchronization apparatus is shown, which is also an example useful for understanding the invention but outside the scope of the invention as claimed. The apparatus may include a second sending module 1201.

The second sending module 1201 is configured to send adjacent pulse signals to a first slave device, where the first slave device is configured to determine a first clock difference based on a receiving time interval of the adjacent pulse signals and a sending time interval at which the adjacent pulse signals are sent by the master device, the first clock difference being configured for the first slave device to perform clock synchronization with the master device. When the first slave device is in clock synchronization with the master device, the first slave device is further configured to send adjacent pulse signals to a second slave device, so that the second slave device determines a second clock difference, the second clock difference being configured for the second slave device to perform clock synchronization with the first slave device.

In some implementations, the second sending module 1201 is further configured to send, to the first slave device, the adjacent pulse signals on at least two frequency hopping channels. The first slave device is further configured to determine the first clock difference based on an average of multiple time interval differences, and the multiple time interval differences are determined based on receiving time intervals at which the adjacent pulse signals are received on the frequency hopping channels and sending time intervals at which the adjacent pulse signals are sent by the master device.

In some implementations, the apparatus further includes a second receiving module and a second determining module. The second receiving module is configured to receive adjacent pulse signals sent by the first slave device.

The second determining module is configured to determine a third clock difference based on a receiving time interval of the adjacent pulse signals and a sending time interval at which the adjacent pulse signals are sent by the first slave device.

The second sending module 1201 is further configured to send the third clock difference to the first slave device, so that the first slave device adjusts a clock parameter thereof based on an average of the first clock difference and the third clock difference so as to get in clock synchronization with the master device.

In some implementations, the second sending module 1201 is further configured to send adjacent pulse signals to the second slave device, so that the second slave device determines a fourth clock difference, the fourth clock difference being configured for the second slave device to perform clock synchronization with the master device.

It is notable that, when the apparatuses provided in the above embodiments realize their functions, it is illustrated only using the above functional modules divided above as an example. In actual application, the above functions may be assigned to different functional modules as needed, that is, the internal structures of the apparatuses may be divided into different functional modules to implement all or part of the functions described above. In addition, the apparatus and method embodiments provided in the above embodiments belong to the same concept, and the specific implementation processes of the apparatus embodiments may refer to the method embodiments, which will not be repeated here.

As illustrated in FIG. 13, a structural block diagram of an electronic device 1300 which is an example useful for understanding the invention but outside the scope of the invention as claimed. The electronic device 1300 in the present disclosure may include one or more of a memory 1320 and a processor 1310.

The processor 1310 may include one or more processing cores. The processor 1310 uses various interfaces and lines to connect various parts within the entire electronic device 1300, and performs various functions and processes data of the electronic device 1300 by running or executing instructions, programs, code sets or instruction sets stored in the memory 1320, and calling data stored in the memory 1320. Optionally, the processor 1310 may be implemented in at least one hardware of digital signal processing (DSP), field-programmable gate array (FPGA), and programmable logic array (PLA). The processor 1310 may be integrated with one or a combination of a central processing unit (CPU), a graphics processing unit (GPU), a modem, and the like. The CPU mainly processes the operating system, user interface, and application programs. The GPU is responsible for rendering and drawing the content to be displayed on the display screen 1330. The modem is configured to process wireless communications. It is understandable that the modem may not be integrated into the processor 1310, but may be implemented separately through a communication chip.

The memory 1320 may include a random access memory (RAM) or a read-only memory (ROM). Optionally, the memory 1320 includes a non-transitory computer-readable storage medium. The memory 1320 may be configured to store instructions, programs, codes, code sets, or instruction sets. The memory 1320 may include a program storage area and a data storage area. The program storage area may store instructions for implementing the operating system, instructions for implementing at least one function (such as a touch function, a sound playback function, and an image playback function), instructions for implementing the above-mentioned various method embodiments, etc. The operating system may be an Android system (including a system deeply developed based on the Android system), an IOS system developed by Apple (including a system deeply developed based on the IOS system), or other systems. The data storage area may also store data created by the electronic device 1300 during use (such as a phone book, audio and video data, and chat record data).

In addition, those skilled in the art will appreciate that the structure of the electronic device 1300 shown in the above figure does not limit the electronic device 1300, and the electronic device may include more or fewer components than those shown, or combine certain components, or arrange the components differently. For example, the electronic device 1300 further includes a radio frequency circuit, a shooting component, a sensor, an audio circuit, a wireless fidelity (WiFi) component, a power supply, a Bluetooth component and other components, which are not described in detail here.

The embodiments of the present disclosure further provide a computer-readable storage medium storing at least one program code, and the program code is loaded and executed by a processor to implement the clock synchronization method described in the above embodiments, which is an example useful for understanding the invention but outside the scope of the invention as claimed.

The embodiments of the present disclosure provide a computer program product or a computer program which is an example useful for understanding the invention but outside the scope of the invention as claimed, where the computer program product or the computer program includes computer instructions stored in a computer-readable storage medium. The processor of the electronic device reads the computer instructions from the computer-readable storage medium, and the processor executes the computer instructions, so that the terminal executes the clock synchronization method provided in various optional implementations of the above aspects.

It is understandable that the term "plurality" mentioned herein refers to two or more than two. The term "and/or" describes an association relationship of associated objects, indicating that there are three relationships. For example, A and/or B may mean: A exists alone, A and B exist at the same time, and B exists alone. The character "/" generally indicates that the preceding and following associated objects are in an "or" relationship. In addition, the step numbers described in the description only exemplarily illustrate a possible execution order between the operations. In some other embodiments, the operations may not be executed in the order of the step numbers, for example, two operations with different numbers are executed at the same time, or two operations with different numbers are executed in the opposite order to that shown in the figure, which is not limited in the embodiments of the present disclosure.

As illustrated in FIG. 13, a structural block diagram of an electronic device 1300 provided by an exemplary embodiment of the present disclosure is shown. The electronic device 1300 in the present disclosure may include one or more of a memory 1320 and a processor 1310.

The processor 1310 may include one or more processing cores. The processor 1310 uses various interfaces and lines to connect various parts within the entire electronic device 1300, and performs various functions and processes data of the electronic device 1300 by running or executing instructions, programs, code sets or instruction sets stored in the memory 1320, and calling data stored in the memory 1320. Optionally, the processor 1310 may be implemented in at least one hardware of digital signal processing (DSP), field-programmable gate array (FPGA), and programmable logic array (PLA). The processor 1310 may be integrated with one or a combination of a central processing unit (CPU), a graphics processing unit (GPU), a modem, and the like. The CPU mainly processes the operating system, user interface, and application programs. The GPU is responsible for rendering and drawing the content to be displayed on the display screen 1330. The modem is configured to process wireless communications. It is understandable that the modem may not be integrated into the processor 1310, but may be implemented separately through a communication chip.

The memory 1320 may include a random access memory (RAM) or a read-only memory (ROM). Optionally, the memory 1320 includes a non-transitory computer-readable storage medium. The memory 1320 may be configured to store instructions, programs, codes, code sets, or instruction sets. The memory 1320 may include a program storage area and a data storage area. The program storage area may store instructions for implementing the operating system, instructions for implementing at least one function (such as a touch function, a sound playback function, and an image playback function), instructions for implementing the above-mentioned various method embodiments, etc. The operating system may be an Android system (including a system deeply developed based on the Android system), an IOS system developed by Apple (including a system deeply developed based on the IOS system), or other systems. The data storage area may also store data created by the electronic device 1300 during use (such as a phone book, audio and video data, and chat record data).

In addition, those skilled in the art will appreciate that the structure of the electronic device 1300 shown in the above figure does not limit the electronic device 1300, and the electronic device may include more or fewer components than those shown, or combine certain components, or arrange the components differently. For example, the electronic device 1300 further includes a radio frequency circuit, a shooting component, a sensor, an audio circuit, a wireless fidelity (WiFi) component, a power supply, a Bluetooth component and other components, which are not described in detail here.

The embodiments of the present disclosure further provide a computer-readable storage medium storing at least one program code, and the program code is loaded and executed by a processor to implement the clock synchronization method described in the above embodiments.

The embodiments of the present disclosure provide a computer program product or a computer program, where the computer program product or the computer program includes computer instructions stored in a computer-readable storage medium. The processor of the electronic device reads the computer instructions from the computer-readable storage medium, and the processor executes the computer instructions, so that the terminal executes the clock synchronization method provided in various optional implementations of the above aspects.

It is understandable that the term "plurality" mentioned herein refers to two or more than two. The term "and/or" describes an association relationship of associated objects, indicating that there are three relationships. For example, A and/or B may mean: A exists alone, A and B exist at the same time, and B exists alone. The character "/" generally indicates that the preceding and following associated objects are in an "or" relationship. In addition, the step numbers described in the description only exemplarily illustrate a possible execution order between the operations. In some other embodiments, the operations may not be executed in the order of the step numbers, for example, two operations with different numbers are executed at the same time, or two operations with different numbers are executed in the opposite order to that shown in the figure, which is not limited in the embodiments of the present disclosure.

The foregoing only illustrates optional embodiments of the present disclosure and is not intended to limit the present disclosure. Any modifications, equivalent substitutions, improvements, etc. made within the principles of the present disclosure shall fall within the protection scope of the present disclosure.

## Claims

1. A clock synchronization method, performed by a first slave device (102), the method comprising:
receiving (202) at least one group of first adjacent pulse signals (301, 302, 303) sent by a master device (101);
determining (202) a first clock difference, based on a receiving time interval (T2) of the at least one group of first adjacent pulse signals (301, 302, 303) and a sending time interval (T1) at which the at least one group of first adjacent pulse signals (301, 302, 303) are sent by the master device (101);
performing clock synchronization with the master device (101), based on the first clock difference; and
in response to the first slave device (102) being in clock synchronization with the master device (101), sending (204) second adjacent pulse signals to a second slave device (103) so that the second slave device (103) determines a second clock difference based on the second adjacent pulse signals, wherein the second clock difference is configured for the second slave device (103) to perform clock synchronization with the first slave device (102);
**characterized in that**,
the receiving the at least one group of first adjacent pulse signals (301, 302, 303) sent by the master device (101) comprises:
receiving (402) each group of first adjacent pulse signals (301, 302, 303) sent by the master device (101) on at least two frequency hopping channels (ch0, ch39, ch78); and
wherein the at least one group of first adjacent pulse signals (301, 302, 303) comprises a plurality of groups of first adjacent pulse signals, and the determining (202) the first clock difference based on the receiving time interval (T2) of the at least one group of first adjacent pulse signals (301, 302, 303) and the sending time interval (T1) at which the at least one group of first adjacent pulse signals (301, 302, 303) are sent by the master device (101), comprises:
determining (403) a time interval difference for each group of the plurality of groups of first adjacent pulse signals, based on a receiving time interval (T1) of the group of first adjacent pulse signals received on the frequency hopping channels (ch0, ch39, ch78) and a sending time interval (T2) at which the group of first adjacent pulse signals are sent by the master device (101); and
determining the first clock difference, based on an average of the time interval differences of the plurality of groups of first adjacent pulse signals.

2. The method as claimed in claim 1, further comprising:
sending (604) third adjacent pulse signals to the master device (101);
receiving (608) a third clock difference from the master device (101), the third clock difference being determined by the master device based in the third adjacent pulse signals; and
adjusting (609) a clock parameter based on an average of the first clock difference and the third clock difference, and getting in clock synchronization with the master device (101) through the adjustment.

3. The method as claimed in claim 1 or 2, wherein each of the first adjacent pulse signals (301, 302, 303) comprises timestamp information;
the determining the time interval difference for each group of the plurality of groups of first adjacent pulse signals, comprises:
determining the receiving time interval (T2) based on receiving times of each group of first adjacent pulse signals;
determining the sending time interval (T1) based on the timestamp information comprised in each group of first adjacent pulse signals; and
determining the time interval difference of each group of first adjacent pulse signals, as a time difference between the receiving time interval (T2) and the sending time interval (T1) of the group of first adjacent pulse signals.

4. The method as claimed in claim 1 or 2, wherein
the method further comprises:
receiving (805) fifth adjacent pulse signals sent by the second slave device (103);
determining (806) a sixth clock difference based on a receiving time interval (T7) at which the fifth adjacent pulse signals are received and a sending time interval (T8) at which the fifth adjacent pulse signals are sent by the second slave device (103);
sending (807) sixth adjacent pulse signals to the master device (101) and the second slave device (103); and
determining (808), based on multiple clock differences, a master clock difference with the master device (101) and a slave clock difference with the second slave device (103);
wherein the multiple clock differences comprise the first clock difference, a fourth clock difference, a fifth clock difference, the sixth clock difference, a seventh clock difference and an eighth clock difference; the fourth clock difference is determined by the second slave device (103) based on fourth adjacent pulse signals sent by the master device (101), and the fourth clock difference is configured for the second slave device (103) to perform clock synchronization with the master device (101); the fifth clock difference is determined by the master device (101) based on the fifth adjacent pulse signals received from the second slave device (103); the seventh clock difference is determined by the master device (101) based on the sixth adjacent pulse signals; and the eighth clock difference is determined by the second slave device (103) based on the sixth adjacent pulse signals.

5. The method as claimed in claim 4, wherein the determining, based on the multiple clock differences, the master clock difference with the master device (101) comprises:
determining an indirect master clock difference between the first slave device (102) and the master device (101), based on a time difference between the fifth clock difference and the sixth clock difference; and
determining the master clock difference, based on an average of the first clock difference, the seventh clock difference and the indirect master clock difference; and
the determining, based on the multiple clock differences, the slave clock difference with the second slave device (103) comprises:
determining an indirect slave clock difference between the first slave device (102) and the second slave device (103), based on a difference between the first clock difference and the fourth clock difference; and
determining the slave clock difference, based on an average of the sixth clock difference, the eighth clock difference, and the indirect slave clock difference.

6. The method as claimed in claim 4, wherein the master device (101), the first slave device (102), and the second slave device (103) cyclically send the adjacent pulse signals;
the determining (808), based on the multiple clock differences, the master clock difference with the master device (101) and the slave clock difference with the second slave device (103), comprises:
in an n-th round of synchronization, based on the clock differences in the n-th round, determining the master clock difference with the master device (101) and the slave clock difference with the second slave device (103), wherein n is a positive integer.

7. The method as claimed in claim 1 or 2, wherein the sending the second adjacent pulse signal to the second slave device (103) comprises:
sending (404), to the second slave device (103), the second adjacent pulse signals on at least two frequency hopping channels (ch0, ch39, ch78).

8. The method as claimed in claim 1 or 2, wherein after sending the second adjacent pulse signals to the second slave device (103), the method further comprises:
receiving (611) seventh adjacent pulse signals sent by the second slave device (103);
determining (612) a ninth clock difference between the first slave device (102) and the second slave device (103), based on the received seventh adjacent pulse signals; and
sending (613) the ninth clock difference to the second slave device (103), so that the second slave device (103) adjusts a clock parameter according to an average of the second clock difference and the ninth clock difference.

9. The method as claimed in claim 1 or 2, wherein the master device is a head-mounted display device, and the first slave device and the second slave device are handle devices.

10. A clock synchronization system, comprising a master device (101), a first slave device (102) and a second slave device (103);
the master device (101) is configured to send at least one group of first adjacent pulse signals to the first slave device (102);
the first slave device (102) is configured to: receive the at least one group of first adjacent pulse signals sent by the master device (101); determine a first clock difference, based on a receiving time interval (T2) of the at least one group of first adjacent pulse signals and a sending time interval (T1) at which the at least one group of first adjacent pulse signals are sent by the master device (102); perform clock synchronization with the master device(101), based on the first clock difference; and send second adjacent pulse signals to the second slave device (103) when the first slave device (102) is in clock synchronization with the master device (101); and
the second slave device (103) is configured to determine a second clock difference based on the second adjacent pulse signals, the second clock difference being configured for the second slave device (103) to perform clock synchronization with the first slave device (102),
**characterized in that**,
the at least one group of first adjacent pulse signals (301, 302, 303) comprises a plurality of groups of first adjacent pulse signals, and each group of first adjacent pulse signals (301, 302, 303) is sent by the master device (101) on at least two frequency hopping channels (ch0, ch39, ch78); and
the first slave device (102) is further configured to:
determine a time interval difference for each group of the plurality of groups of first adjacent pulse signals, based on a receiving time interval (T1) of the group of first adjacent pulse signals received on the frequency hopping channels (ch0, ch39, ch78) and a sending time interval (T2) at which the group of first adjacent pulse signals are sent by the master device (101); and
determine the first clock difference, based on an average of the time interval differences of the plurality of groups of first adjacent pulse signals.

11. The clock synchronization system as claimed in claim 10, wherein the master device (101) is further configured to determine a third clock difference based on third adjacent pulse signals received from the first slave device (102), and send the third clock difference to the first slave device (102), and
the first slave device (102) is further configure to adjust a clock parameter based on an average of the first clock difference and the third clock difference, and get in clock synchronization with the master device (101) through the adjustment.

12. The clock synchronization system as claimed in claim 10, wherein each of the first adjacent pulse signals (301, 302, 303) comprises timestamp information;
the first slave device (102) is further configure to:
determine the receiving time interval (T2) based on receiving times of each group of first adjacent pulse signals;
determine the sending time interval (T1) based on the timestamp information comprised in each group of first adjacent pulse signals; and
determine the time interval difference of each group of first adjacent pulse signals, as a time difference between the receiving time interval (T2) and the sending time interval (T1) of the group of first adjacent pulse signals.

13. The clock synchronization system as claimed in claim 10, wherein the master device (101) is further configured to send fourth adjacent pulse signals to the second slave device (103);
the second slave device (103) is further configured to: determine a fourth clock difference based on the fourth adjacent pulse signals, the fourth clock difference being configured for the second slave device (103) to perform clock synchronization with the master device (101); and send fifth adjacent pulse signals to the first slave device (102) and the master device (101);
the master device (101) is further configured to determine a fifth clock difference after receiving the fifth adjacent pulse signals;
the first slave device (102) is further configure to:
receive the fifth adjacent pulse signals sent by the second slave device (103);
determine a sixth clock difference based on a receiving time interval (T7) at which the fifth adjacent pulse signals are received and a sending time interval (T8) at which the fifth adjacent pulse signals are sent by the second slave device (103);
send sixth adjacent pulse signals to the master device (101) and the second slave device (103), so that the master device (101) is further configured to determine a seventh clock difference based on the sixth adjacent pulse signals, and the second slave device (103) is further configured to determine an eighth clock difference based on the sixth adjacent pulse signals; and
determine, based on the individual clock differences, a master clock difference with the master device (101) and a slave clock difference with the second slave device (103).

14. The clock synchronization system as claimed in claim 13, wherein the first slave device (102) is further configure to:
determine an indirect master clock difference between the first slave device (102) and the master device (101), based on a time difference between the fifth clock difference and the sixth clock difference; and determine the master clock difference, based on an average of the first clock difference, the seventh clock difference and the indirect master clock difference; and
determine an indirect slave clock difference between the first slave device (102) and the second slave device (103), based on a difference between the first clock difference and the fourth clock difference; and determine the slave clock difference, based on an average of the sixth clock difference, the eighth clock difference, and the indirect slave clock difference.

15. The clock synchronization system as claimed in claim 10, wherein after the second adjacent pulse signals are sent to the second slave device (103), the first slave device (102) is further configure to:
receive seventh adjacent pulse signals sent by the second slave device (103);
determine a ninth clock difference between the first slave device (102) and the second slave device (103), based on the received seventh adjacent pulse signals; and
send the ninth clock difference to the second slave device (103); and
the second slave device (103) is further configured to adjust a clock parameter according to an average of the second clock difference and the ninth clock difference.

## Patentansprüche

1. Taktsynchronisationsverfahren, welches von einer ersten Slave-Vorrichtung (102) durchgeführt wird, wobei das Verfahren umfasst:
Empfangen (202) zumindest einer Gruppe von ersten benachbarten Impulssignalen (301, 302, 303), welche von einer Master-Vorrichtung (101) gesendet werden;
Bestimmen (202) einer ersten Taktdifferenz basierend auf einem Empfangszeitintervall (T2) der zumindest einen Gruppe von ersten benachbarten Impulssignalen (301, 302, 303) und einem Sendezeitintervall (T1), mit welchem die zumindest eine Gruppe von ersten benachbarten Impulssignalen (301, 302, 303) von der Master-Vorrichtung (101) gesendet werden;
Durchführen von Taktsynchronisation mit der Master-Vorrichtung (101) basierend auf der ersten Taktdifferenz; und
als Reaktion darauf, dass sich die erste Slave-Vorrichtung (102) in Taktsynchronisation mit der Master-Vorrichtung (101) befindet, Senden (204) von zweiten benachbarten Impulssignalen an eine zweite Slave-Vorrichtung (103), sodass die zweite Slave-Vorrichtung (103) basierend auf den zweiten benachbarten Impulssignalen eine zweite Taktdifferenz bestimmt, wobei die zweite Taktdifferenz so konfiguriert ist, dass die zweite Slave-Vorrichtung (103) Taktsynchronisation mit der ersten Slave-Vorrichtung (102) durchführt;
**dadurch gekennzeichnet, dass**
das Empfangen der zumindest einen Gruppe von ersten benachbarten Impulssignalen (301, 302, 303), welche von der Master-Vorrichtung (101) gesendet werden, umfasst:
Empfangen (402) jeder Gruppe von ersten benachbarten Impulssignalen (301, 302, 303), welche von der Master-Vorrichtung (101) auf zumindest zwei Frequenzsprungkanälen (ch0, ch39, ch78) gesendet werden; und
wobei die zumindest eine Gruppe von ersten benachbarten Impulssignalen (301, 302, 303) eine Vielzahl von Gruppen von ersten benachbarten Impulssignalen umfasst, und das Bestimmen (202) der ersten Taktdifferenz basierend auf dem Empfangszeitintervall (T2) der zumindest einen Gruppe von ersten benachbarten Impulssignalen (301, 302, 303) und dem Sendezeitintervall (T1), mit welchem die zumindest eine Gruppe von ersten benachbarten Impulssignalen (301, 302, 303) von der Master-Vorrichtung (101) gesendet werden, umfasst:
Bestimmen (403) einer Zeitintervalldifferenz für jede Gruppe der Vielzahl von Gruppen von ersten benachbarten Impulssignalen basierend auf einem Empfangszeitintervall (T1) der Gruppe von ersten benachbarten Impulssignalen, welche auf den Frequenzsprungkanälen (ch0, ch39, ch78) empfangen werden, und einem Sendezeitintervall (T2), mit welchem die Gruppe von ersten benachbarten Impulssignalen von der Master-Vorrichtung (101) gesendet werden; und
Bestimmen der ersten Taktdifferenz basierend auf einem Mittelwert der Zeitintervalldifferenzen der Vielzahl von Gruppen von ersten benachbarten Impulssignalen.

2. Verfahren nach Anspruch 1, weiter umfassend:
Senden (604) von dritten benachbarten Impulssignalen an die Master-Vorrichtung (101);
Empfangen (608) einer dritten Taktdifferenz von der Master-Vorrichtung (101), wobei die dritte Taktdifferenz durch die Master-Vorrichtung basierend auf den dritten benachbarten Impulssignalen bestimmt wird; und
Anpassen (609) eines Taktparameters basierend auf einem Mittelwert der ersten Taktdifferenz und der dritten Taktdifferenz, und Erreichen von Taktsynchronisation mit der Master-Vorrichtung (101) durch die Anpassung.

3. Verfahren nach Anspruch 1 oder 2, wobei jedes der ersten benachbarten Impulssignale (301, 302, 303) Zeitstempelinformationen umfasst;
das Bestimmen der Zeitintervalldifferenz für jede Gruppe der Vielzahl von Gruppen von ersten benachbarten Impulssignalen umfasst:
Bestimmen des Empfangszeitintervalls (T2) basierend auf Empfangszeiten jeder Gruppe von ersten benachbarten Impulssignalen;
Bestimmen des Sendezeitintervalls (T1) basierend auf Zeitstempelinformationen, welche in jeder Gruppe von ersten benachbarten Impulssignalen enthalten sind; und
Bestimmen der Zeitintervalldifferenz jeder Gruppe von ersten benachbarten Impulssignalen als eine Zeitdifferenz zwischen dem Empfangszeitintervall (T2) und dem Sendezeitintervall (T1) der Gruppe von ersten benachbarten Impulssignalen.

4. Verfahren nach Anspruch 1 oder 2, wobei das Verfahren weiter umfasst:
Empfangen (805) von fünften benachbarten Impulssignalen, welche von der zweiten Slave-Vorrichtung (103) gesendet werden;
Bestimmen (806) einer sechsten Taktdifferenz basierend auf einem Empfangszeitintervall (T7), mit welchem die fünften benachbarten Impulssignale empfangen werden, und einem Sendezeitintervall (T8), mit welchem die fünften benachbarten Impulssignale von der zweiten Slave-Vorrichtung (103) gesendet werden;
Senden (807) von sechsten benachbarten Impulssignalen an die Master-Vorrichtung (101) und die zweite Slave-Vorrichtung (103); und
Bestimmen (808) einer Master-Taktdifferenz mit der Master-Vorrichtung (101) und einer Slave-Taktdifferenz mit der zweiten Slave-Vorrichtung (103) basierend auf mehreren Taktdifferenzen;
wobei die mehreren Taktdifferenzen die erste Taktdifferenz, eine vierte Taktdifferenz, eine fünfte Taktdifferenz, die sechste Taktdifferenz, eine siebte Taktdifferenz und eine achte Taktdifferenz umfassen; die vierte Taktdifferenz durch die zweite Slave-Vorrichtung (103) basierend auf vierten benachbarten Impulssignalen bestimmt wird, welche von der Master-Vorrichtung (101) gesendet werden, und die vierte Taktdifferenz so konfiguriert ist, dass die zweite Slave-Vorrichtung (103) Taktsynchronisation mit der Master-Vorrichtung (101) durchführt; die fünfte Taktdifferenz durch die Master-Vorrichtung (101) basierend auf den fünften benachbarten Impulssignalen bestimmt wird, welche von der zweiten Slave-Vorrichtung (103) empfangen werden; die siebte Taktdifferenz durch die Master-Vorrichtung (101) basierend auf den sechsten benachbarten Impulssignalen bestimmt wird; und die achte Taktdifferenz durch die zweite Slave-Vorrichtung (103) basierend auf den sechsten benachbarten Impulssignalen bestimmt wird.

5. Verfahren nach Anspruch 4, wobei das Bestimmen der Master-Taktdifferenz mit der Master-Vorrichtung (101) basierend auf den mehreren Taktdifferenzen umfasst:
Bestimmen einer indirekten Master-Taktdifferenz zwischen der ersten Slave-Vorrichtung (102) und der Master-Vorrichtung (101) basierend auf einer Zeitdifferenz zwischen der fünften Taktdifferenz und der sechsten Taktdifferenz; und
Bestimmen der Master-Taktdifferenz basierend auf einem Mittelwert der ersten Taktdifferenz, der siebten Taktdifferenz und der indirekten Master-Taktdifferenz; und
das Bestimmen der Slave-Taktdifferenz mit der zweiten Slave-Vorrichtung (103) basierend auf den mehreren Taktdifferenzen umfasst:
Bestimmen einer indirekten Slave-Taktdifferenz zwischen der ersten Slave-Vorrichtung (102) und der zweiten Slave-Vorrichtung (103) basierend auf einer Differenz zwischen der ersten Taktdifferenz und der vierten Taktdifferenz; und
Bestimmen der Slave-Taktdifferenz basierend auf einem Mittelwert der sechsten Taktdifferenz, der achten Taktdifferenz und der indirekten Slave-Taktdifferenz.

6. Verfahren nach Anspruch 4, wobei die Master-Vorrichtung (101), die erste Slave-Vorrichtung (102) und die zweite Slave-Vorrichtung (103) die benachbarten Impulssignale zyklisch senden;
das Bestimmen (808) der Master-Taktdifferenz mit der Master-Vorrichtung (101) und der Slave-Taktdifferenz mit der zweiten Slave-Vorrichtung (103) basierend auf den mehreren Taktdifferenzen umfasst:
Bestimmen der Master-Taktdifferenz mit der Master-Vorrichtung (101) und der Slave-Taktdifferenz mit der zweiten Slave-Vorrichtung (103)in einer n-ten Runde der Synchronisation basierend auf den Taktdifferenzen in der n-ten Runde, wobei n eine positive Ganzzahl ist.

7. Verfahren nach Anspruch 1 oder 2, wobei das Senden des zweiten benachbarten Impulssignals an die zweite Slave-Vorrichtung (103) umfasst:
Senden (404) der zweiten benachbarten Impulssignale auf zumindest zwei Frequenzsprungkanälen (ch0, ch39, ch78) an die zweite Slave-Vorrichtung (103).

8. Verfahren nach Anspruch 1 oder 2, wobei nach Senden der zweiten benachbarten Impulssignale an die zweite Slave-Vorrichtung (103) das Verfahren weiter umfasst:
Empfangen (611) von siebten benachbarten Impulssignalen, welche von der zweiten Slave-Vorrichtung (103) gesendet werden;
Bestimmen (612) einer neunten Taktdifferenz zwischen der ersten Slave-Vorrichtung (102) und der zweiten Slave-Vorrichtung (103) basierend auf den empfangenen siebten benachbarten Impulssignalen; und
Senden (613) der neunten Taktdifferenz an die zweite Slave-Vorrichtung (103), sodass die zweite Slave-Vorrichtung (103) einen Taktparameter gemäß einem Mittelwert der zweiten Taktdifferenz und der neunten Taktdifferenz anpasst.

9. Verfahren nach Anspruch 1 oder 2, wobei die Master-Vorrichtung eine Datenhelmvorrichtung ist, und die erste Slave-Vorrichtung und die zweite Slave-Vorrichtung Griffvorrichtungen sind.

10. Taktsynchronisationssystem, umfassend eine Master-Vorrichtung (101), eine erste Slave-Vorrichtung (102) und eine zweite Slave-Vorrichtung (103);
wobei die Master-Vorrichtung (101) dazu konfiguriert ist, zumindest eine Gruppe von ersten benachbarten Impulssignalen an die erste Slave-Vorrichtung (102) zu senden;
wobei die erste Slave-Vorrichtung (102) dazu konfiguriert ist, die zumindest eine Gruppe von ersten benachbarten Impulssignalen zu empfangen, welche von der Master-Vorrichtung (101) gesendet wurden; eine erste Taktdifferenz basierend auf einem Empfangszeitintervall (T2) der zumindest einen Gruppe von ersten benachbarten Impulssignalen und einem Sendezeitintervall (T1) zu bestimmen, mit welchem die zumindest eine Gruppe von ersten benachbarten Impulssignalen von der Master-Vorrichtung (102) gesendet werden; Taktsynchronisation mit der Master-Vorrichtung (101) basierend auf der ersten Taktdifferenz durchzuführen; und zweite benachbarte Impulssignale an die zweite Slave-Vorrichtung (103) zu senden, wenn die erste Slave-Vorrichtung (102) mit der Master-Vorrichtung (101) in Taktsynchronisation ist; und
die zweite Slave-Vorrichtung (103) dazu konfiguriert ist, basierend auf den zweiten benachbarten Impulssignalen eine zweite Taktdifferenz zu bestimmen, wobei die zweite Taktdifferenz so konfiguriert ist, dass die zweite Slave-Vorrichtung (103) Taktsynchronisation mit der ersten Slave-Vorrichtung (102) durchführt,
**dadurch gekennzeichnet, dass**
die zumindest eine Gruppe von ersten benachbarten Impulssignalen (301, 302, 303) eine Vielzahl von Gruppen von ersten benachbarten Impulssignalen umfasst, und jede Gruppe von ersten benachbarten Impulssignalen (301, 302, 303) von der Master-Vorrichtung (101) auf zumindest zwei Frequenzsprungkanälen (ch0, ch39, ch78) gesendet wird; und
die erste Slave-Vorrichtung (102) weiter dazu konfiguriert ist:
eine Zeitintervalldifferenz für jede Gruppe der Vielzahl von Gruppen von ersten benachbarten Impulssignalen basierend auf einem Empfangszeitintervall (T1) der Gruppe von ersten benachbarten Impulssignalen, welche auf den Frequenzsprungkanälen (ch0, ch39, ch78) empfangen werden, und einem Sendezeitintervall (T2) zu bestimmen, mit welchem die Gruppe von ersten benachbarten Impulssignalen von der Master-Vorrichtung (101) gesendet werden; und
die erste Taktdifferenz basierend auf einem Mittelwert der Zeitintervalldifferenzen der Vielzahl von Gruppen von ersten benachbarten Impulssignalen zu bestimmen.

11. Taktsynchronisationssystem nach Anspruch 10, wobei die Master-Vorrichtung (101) weiter dazu konfiguriert ist, eine dritte Taktdifferenz basierend auf dritten benachbart Impulssignalen zu bestimmen, welche von der ersten Slave-Vorrichtung (102) empfangen werden, und die dritte Taktdifferenz an die erste Slave-Vorrichtung (102) zu senden, und
die erste Slave-Vorrichtung (102) weiter dazu konfiguriert ist, einen Taktparameter basierend auf einem Mittelwert der ersten Taktdifferenz und der dritten Taktdifferenz anzupassen, und durch die Anpassung Taktsynchronisation mit der Master-Vorrichtung (101) zu erreichen.

12. Taktsynchronisationssystem nach Anspruch 10, wobei jedes der ersten benachbarten Impulssignale (301, 302, 303) Zeitstempelinformationen umfasst;
die erste Slave-Vorrichtung (102) weiter dazu konfiguriert ist:
das Empfangszeitintervall (T2) basierend auf Empfangszeiten jeder Gruppe von ersten benachbarten Impulssignalen zu bestimmen;
das Sendezeitintervall (T1) basierend auf Zeitstempelinformationen zu bestimmen, welche in jeder Gruppe von ersten benachbarten Impulssignalen enthalten sind; und
die Zeitintervalldifferenz jeder Gruppe von ersten benachbarten Impulssignalen als eine Zeitdifferenz zwischen dem Empfangszeitintervall (T2) und dem Sendezeitintervall (T1) der Gruppe von ersten benachbarten Impulssignalen zu bestimmen.

13. Taktsynchronisationssystem nach Anspruch 10, wobei die Master-Vorrichtung (101) weiter dazu konfiguriert ist, vierte benachbarte Impulssignale an die zweite Slave-Vorrichtung (103) zu senden;
die zweite Slave-Vorrichtung (103) weiter dazu konfiguriert ist, basierend auf den vierten benachbarten Impulssignalen eine vierte Taktdifferenz zu bestimmen, wobei die vierte Taktdifferenz so konfiguriert ist, dass die zweite Slave-Vorrichtung (103) Taktsynchronisation mit der Master-Vorrichtung (101) durchführt; und fünfte benachbarte Impulssignale an die erste Slave-Vorrichtung (102) und die Master-Vorrichtung (101) sendet;
die Master-Vorrichtung (101) weiter dazu konfiguriert ist, nach Empfangen der fünften benachbarten Impulssignalen eine fünfte Taktdifferenz zu bestimmen;
die erste Slave-Vorrichtung (102) weiter dazu konfiguriert ist:
fünfte benachbarte Impulssignale zu empfangen, welche von der zweiten Slave-Vorrichtung (103) gesendet werden;
eine sechste Taktdifferenz basierend auf einem Empfangszeitintervall (T7), mit welchem die fünften benachbarten Impulssignale empfangen werden, und einem Sendezeitintervall (T8) zu bestimmen, mit welchem die fünften benachbarten Impulssignale von der zweiten Slave-Vorrichtung (103) gesendet werden;
sechste benachbarte Impulssignale an die Master-Vorrichtung (101) und die zweite Slave-Vorrichtung (103) zu senden, sodass die Master-Vorrichtung (101) weiter dazu konfiguriert ist, basierend auf den sechsten benachbarten Impulssignalen eine siebte Taktdifferenz zu bestimmen, und die zweite Slave-Vorrichtung (103) weiter dazu konfiguriert ist, basierend auf den sechsten benachbarten Impulssignalen eine achte Taktdifferenz zu bestimmen; und
eine Master-Taktdifferenz mit der Master-Vorrichtung (101) und eine Slave-Taktdifferenz mit der zweiten Slave-Vorrichtung (103) basierend auf den jeweiligen Taktdifferenzen zu bestimmen.

14. Taktsynchronisationssystem nach Anspruch 13, wobei die erste Slave-Vorrichtung (102) weiter dazu konfiguriert ist:
eine indirekte Master-Taktdifferenz zwischen der ersten Slave-Vorrichtung (102) und der Master-Vorrichtung (101) basierend auf einer Zeitdifferenz zwischen der fünften Taktdifferenz und der sechsten Taktdifferenz zu bestimmen; und die Master-Taktdifferenz basierend auf einem Mittelwert der ersten Taktdifferenz, der siebten Taktdifferenz und der indirekten Master-Taktdifferenz zu bestimmen; und
eine indirekte Slave-Taktdifferenz zwischen der ersten Slave-Vorrichtung (102) und der zweiten Slave-Vorrichtung (103) basierend auf einer Differenz zwischen der ersten Taktdifferenz und der vierten Taktdifferenz zu bestimmen; und die Slave-Taktdifferenz basierend auf einem Mittelwert der sechsten Taktdifferenz, der achten Taktdifferenz und der indirekten Slave-Taktdifferenz zu bestimmen.

15. Taktsynchronisationssystem nach Anspruch 10, wobei, nachdem die zweiten benachbarten Impulssignale an die zweite Slave-Vorrichtung (103) gesendet wurden, die erste Slave-Vorrichtung (102) weiter dazu konfiguriert ist:
siebte benachbarte Impulssignale zu empfangen, welche von der zweiten Slave-Vorrichtung (103) gesendet werden;
eine neunte Taktdifferenz zwischen der ersten Slave-Vorrichtung (102) und der zweiten Slave-Vorrichtung (103) basierend auf den empfangenen siebten benachbarten Impulssignalen zu bestimmen; und
die neunte Taktdifferenz an die zweite Slave-Vorrichtung (103) senden; und
die zweite Slave-Vorrichtung (103) weiter dazu konfiguriert ist, einen Taktparameter gemäß einem Mittelwert der zweiten Taktdifferenz und der neunten Taktdifferenz anzupassen.

## Revendications

1. Procédé de synchronisation d'horloge, réalisé par un premier dispositif esclave (102), le procédé comprenant :
la réception (202) d'au moins un groupe de premiers signaux à impulsions adjacents (301, 302, 303) envoyés par un dispositif maître (101) ;
la détermination (202) d'une première différence d'horloge, sur la base d'un intervalle de temps de réception (T2) du au moins un groupe de premiers signaux à impulsions adjacents (301, 302, 303) et d'un intervalle de temps d'envoi (T1) auquel le au moins un groupe de premiers signaux à impulsions adjacents (301, 302, 303) est envoyé par le dispositif maître (101) ;
la réalisation d'une synchronisation d'horloge avec le dispositif maître (101), sur la base de la première différence d'horloge ; et
en réponse au fait que le premier dispositif esclave (102) est en synchronisation d'horloge avec le dispositif maître (101), l'envoi (204) de deuxièmes signaux à impulsions adjacents à un second dispositif esclave (103) de sorte que le second dispositif esclave (103) détermine une deuxième différence d'horloge sur la base des deuxièmes signaux à impulsions adjacents, dans lequel la deuxième différence d'horloge est configurée pour que le second dispositif esclave (103) réalise une synchronisation d'horloge avec le premier dispositif esclave (102) ;
**caractérisé en ce que**,
la réception du au moins un groupe de premiers signaux à impulsions adjacents (301, 302, 303) envoyés par le dispositif maître (101) comprend :
la réception (402) de chaque groupe de premiers signaux à impulsions adjacents (301, 302, 303) envoyés par le dispositif maître (101) sur au moins deux canaux de saut de fréquence (ch0, ch39, ch78) ; et
dans lequel le au moins un groupe de premiers signaux à impulsions adjacents (301, 302, 303) comprend une pluralité de groupes de premiers signaux à impulsions adjacents, et la détermination (202) de la première différence d'horloge sur la base de l'intervalle de temps de réception (T2) du au moins un groupe de premiers signaux à impulsions adjacents (301, 302, 303) et de l'intervalle de temps d'envoi (T1) auquel le au moins un groupe de premiers signaux à impulsions adjacents (301, 302, 303) est envoyé par le dispositif maître (101) comprend :
la détermination (403) d'une différence d'intervalle de temps pour chaque groupe de la pluralité de groupes de premiers signaux à impulsions adjacents, sur la base d'un intervalle de temps de réception (T1) du groupe de premiers signaux à impulsions adjacents reçu sur les canaux de saut de fréquence (ch0, ch39, ch78) et d'un intervalle de temps d'envoi (T2) auquel le groupe de premiers signaux à impulsions adjacents est envoyé par le dispositif maître (101) ; et
la détermination de la première différence d'horloge, sur la base d'une moyenne des différences d'intervalle de temps de la pluralité de groupes de premiers signaux à impulsions adjacents.

2. Procédé selon la revendication 1, comprenant en outre :
l'envoi (604) de troisièmes signaux à impulsions adjacents au dispositif maître (101) ;
la réception (608) d'une troisième différence d'horloge provenant du dispositif maître (101), la troisième différence d'horloge étant déterminée par le dispositif maître sur la base des troisièmes signaux à impulsions adjacents ; et
l'ajustement (609) d'un paramètre d'horloge sur la base d'une moyenne de la première différence d'horloge et de la troisième différence d'horloge, et l'obtention d'une synchronisation d'horloge avec le dispositif maître (101) grâce à l'ajustement.

3. Procédé selon la revendication 1 ou 2, dans lequel chacun des premiers signaux à impulsions adjacents (301, 302, 303) comprend des informations d'horodatage ;
la détermination de la différence d'intervalle de temps pour chaque groupe de la pluralité de groupes de premiers signaux à impulsions adjacents comprend :
la détermination de l'intervalle de temps de réception (T2) sur la base de temps de réception de chaque groupe de premiers signaux à impulsions adjacents ;
la détermination de l'intervalle de temps d'envoi (T1) sur la base des informations d'horodatage comprises dans chaque groupe de premiers signaux à impulsions adjacents ; et
la détermination de la différence d'intervalle de temps de chaque groupe de premiers signaux à impulsions adjacents, en tant que différence de temps entre l'intervalle de temps de réception (T2) et l'intervalle de temps d'envoi (T1) du groupe de premiers signaux à impulsions adjacents.

4. Procédé selon la revendication 1 ou 2, dans lequel le procédé comprend en outre :
la réception (805) de cinquièmes signaux à impulsions adjacents envoyés par le second dispositif esclave (103) ;
la détermination (806) d'une sixième différence d'horloge sur la base d'un intervalle de temps de réception (T7) auquel les cinquièmes signaux à impulsions adjacents sont reçus et d'un intervalle de temps d'envoi (T8) auquel les cinquièmes signaux à impulsions adjacents sont envoyés par le second dispositif esclave (103) ;
l'envoi (807) de sixièmes signaux à impulsions adjacents au dispositif maître (101) et au second dispositif esclave (103) ; et
la détermination (808), sur la base de multiples différences d'horloge, d'une différence d'horloge maîtresse avec le dispositif maître (101) et d'une différence d'horloge esclave avec le second dispositif esclave (103) ;
dans lequel les multiples différences d'horloge comprennent la première différence d'horloge, une quatrième différence d'horloge, une cinquième différence d'horloge, la sixième différence d'horloge, une septième différence d'horloge et une huitième différence d'horloge ; la quatrième différence d'horloge est déterminée par le second dispositif esclave (103) sur la base de quatrièmes signaux à impulsions adjacents envoyés par le dispositif maître (101), et la quatrième différence d'horloge est configurée pour que le second dispositif esclave (103) réalise une synchronisation d'horloge avec le dispositif maître (101) ; la cinquième différence d'horloge est déterminée par le dispositif maître (101) sur la base des cinquièmes signaux à impulsions adjacents reçus à partir du second dispositif esclave (103) ; la septième différence d'horloge est déterminée par le dispositif maître (101) sur la base des sixièmes signaux à impulsions adjacents ; et la huitième différence d'horloge est déterminée par le second dispositif esclave (103) sur la base des sixièmes signaux à impulsions adjacents.

5. Procédé selon la revendication 4, dans lequel la détermination, sur la base des multiples différences d'horloge, de la différence d'horloge maîtresse avec le dispositif maître (101) comprend :
la détermination d'une différence d'horloge maîtresse indirecte entre le premier dispositif esclave (102) et le dispositif maître (101), sur la base d'une différence de temps entre la cinquième différence d'horloge et la sixième différence d'horloge ; et
la détermination de la différence d'horloge maîtresse, sur la base d'une moyenne de la première différence d'horloge, de la septième différence d'horloge et de la différence d'horloge maîtresse indirecte ; et
la détermination, sur la base des multiples différences d'horloge, de la différence d'horloge esclave avec le second dispositif esclave (103) comprend :
la détermination d'une différence d'horloge esclave indirecte entre le premier dispositif esclave (102) et le second dispositif esclave (103), sur la base d'une différence entre la première différence d'horloge et la quatrième différence d'horloge ; et
la détermination de la différence d'horloge esclave, sur la base d'une moyenne de la sixième différence d'horloge, de la huitième différence d'horloge et de la différence d'horloge esclave indirecte.

6. Procédé selon la revendication 4, dans lequel le dispositif maître (101), le premier dispositif esclave (102) et le second dispositif esclave (103) envoient cycliquement les signaux à impulsions adjacents ;
la détermination (808), sur la base des multiples différences d'horloge, de la différence d'horloge maîtresse avec le dispositif maître (101) et de la différence d'horloge esclave avec le second dispositif esclave (103) comprend :
dans un n-ième tour de synchronisation, sur la base des différences d'horloge dans le n-ième tour, la détermination de la différence d'horloge maîtresse avec le dispositif maître (101) et de la différence d'horloge esclave avec le second dispositif esclave (103), dans lequel n est un entier positif.

7. Procédé selon la revendication 1 ou 2, dans lequel l'envoi du deuxième signal à impulsions adjacent au second dispositif esclave (103) comprend :
l'envoi (404), au second dispositif esclave (103), des deuxièmes signaux à impulsions adjacents sur au moins deux canaux de saut de fréquence (ch0, ch39, ch78).

8. Procédé selon la revendication 1 ou 2, dans lequel, après l'envoi des deuxièmes signaux à impulsions adjacents au second dispositif esclave (103), le procédé comprend en outre :
la réception (611) de septièmes signaux à impulsions adjacents envoyés par le second dispositif esclave (103) ;
la détermination (612) d'une neuvième différence d'horloge entre le premier dispositif esclave (102) et le second dispositif esclave (103), sur la base des septièmes signaux à impulsions adjacents reçus ; et
l'envoi (613) de la neuvième différence d'horloge au second dispositif esclave (103), de sorte que le second dispositif esclave (103) ajuste un paramètre d'horloge en fonction d'une moyenne de la deuxième différence d'horloge et de la neuvième différence d'horloge.

9. Procédé selon la revendication 1 ou 2, dans lequel le dispositif maître est un dispositif d'affichage tête haute, et le premier dispositif esclave et le second dispositif esclave sont des dispositifs à manche.

10. Système de synchronisation d'horloge, comprenant un dispositif maître (101), un premier dispositif esclave (102) et un second dispositif esclave (103) ;
le dispositif maître (101) est configuré pour envoyer au moins un groupe de premiers signaux à impulsions adjacents au premier dispositif esclave (102) ;
le premier dispositif esclave (102) est configuré pour : recevoir le au moins un groupe de premiers signaux à impulsions adjacents envoyés par le dispositif maître (101) ; déterminer une première différence d'horloge, sur la base d'un intervalle de temps de réception (T2) du au moins un groupe de premiers signaux à impulsions adjacents et d'un intervalle de temps d'envoi (T1) auquel le au moins un groupe de premiers signaux à impulsions adjacents est envoyé par le dispositif maître (102) ; réaliser une synchronisation d'horloge avec le dispositif maître (101), sur la base de la première différence d'horloge ; et envoyer des deuxièmes signaux à impulsions adjacents au second dispositif esclave (103) lorsque le premier dispositif esclave (102) est en synchronisation d'horloge avec le dispositif maître (101) ; et
le second dispositif esclave (103) est configuré pour déterminer une deuxième différence d'horloge sur la base des deuxièmes signaux à impulsions adjacents, la deuxième différence d'horloge étant configurée pour que le second dispositif esclave (103) réalise une synchronisation d'horloge avec le premier dispositif esclave (102),
**caractérisé en ce que**,
le au moins un groupe de premiers signaux à impulsions adjacents (301, 302, 303) comprend une pluralité de groupes de premiers signaux à impulsions adjacents, et chaque groupe de premiers signaux à impulsions adjacents (301, 302, 303) est envoyé par le dispositif maître (101) sur au moins deux canaux de saut de fréquence (ch0, ch39, ch78) ; et
le premier dispositif esclave (102) est en outre configuré pour :
déterminer une différence d'intervalle de temps pour chaque groupe de la pluralité de groupes de premiers signaux à impulsions adjacents, sur la base d'un intervalle de temps de réception (T1) du groupe de premiers signaux à impulsions adjacents reçu sur les canaux de saut de fréquence (ch0, ch39, ch78) et d'un intervalle de temps d'envoi (T2) auquel le groupe de premiers signaux à impulsions adjacents est envoyé par le dispositif maître (101) ; et
déterminer la première différence d'horloge, sur la base d'une moyenne des différences d'intervalle de temps de la pluralité de groupes de premiers signaux à impulsions adjacents.

11. Système de synchronisation d'horloge selon la revendication 10, dans lequel le dispositif maître (101) est en outre configuré pour déterminer une troisième différence d'horloge sur la base de troisièmes signaux à impulsions adjacents reçus à partir du premier dispositif esclave (102), et envoyer la troisième différence d'horloge au premier dispositif esclave (102), et
le premier dispositif esclave (102) est en outre configuré pour ajuster un paramètre d'horloge sur la base d'une moyenne de la première différence d'horloge et de la troisième différence d'horloge, et obtenir une synchronisation d'horloge avec le dispositif maître (101) grâce à l'ajustement.

12. Système de synchronisation d'horloge selon la revendication 10, dans lequel chacun des premiers signaux à impulsions adjacents (301, 302, 303) comprend des informations d'horodatage ;
le premier dispositif esclave (102) est en outre configuré pour :
déterminer l'intervalle de temps de réception (T2) sur la base de temps de réception de chaque groupe de premiers signaux à impulsions adjacents ;
déterminer l'intervalle de temps d'envoi (T1) sur la base des informations d'horodatage comprises dans chaque groupe de premiers signaux à impulsions adjacents ; et
déterminer la différence d'intervalle de temps de chaque groupe de premiers signaux à impulsions adjacents, en tant que différence de temps entre l'intervalle de temps de réception (T2) et l'intervalle de temps d'envoi (T1) du groupe de premiers signaux à impulsions adjacents.

13. Système de synchronisation d'horloge selon la revendication 10, dans lequel le dispositif maître (101) est en outre configuré pour envoyer des quatrièmes signaux à impulsions adjacents au second dispositif esclave (103) ;
le second dispositif esclave (103) est en outre configuré pour : déterminer une quatrième différence d'horloge sur la base des quatrièmes signaux à impulsions adjacents, la quatrième différence d'horloge étant configurée pour que le second dispositif esclave (103) réalise une synchronisation d'horloge avec le dispositif maître (101) ; et envoyer des cinquièmes signaux à impulsions adjacents au premier dispositif esclave (102) et au dispositif maître (101) ;
le dispositif maître (101) est en outre configuré pour déterminer une cinquième différence d'horloge après avoir reçu les cinquièmes signaux à impulsions adjacents ;
le premier dispositif esclave (102) est en outre configuré pour :
recevoir les cinquièmes signaux à impulsions adjacents envoyés par le second dispositif esclave (103) ;
déterminer une sixième différence d'horloge sur la base d'un intervalle de temps de réception (T7) auquel les cinquièmes signaux à impulsions adjacents sont reçus et d'un intervalle de temps d'envoi (T8) auquel les cinquièmes signaux à impulsions adjacents sont envoyés par le second dispositif esclave (103) ;
envoyer des sixièmes signaux à impulsions adjacents au dispositif maître (101) et au second dispositif esclave (103), de sorte que le dispositif maître (101) soit en outre configuré pour déterminer une septième différence d'horloge sur la base des sixièmes signaux à impulsions adjacents, et le second dispositif esclave (103) est en outre configuré pour déterminer une huitième différence d'horloge sur la base des sixièmes signaux à impulsions adjacents ; et
déterminer, sur la base des différences d'horloge individuelles, une différence d'horloge maîtresse avec le dispositif maître (101) et une différence d'horloge esclave avec le second dispositif esclave (103).

14. Système de synchronisation d'horloge selon la revendication 13, dans lequel le premier dispositif esclave (102) est en outre configuré pour :
déterminer une différence d'horloge maîtresse indirecte entre le premier dispositif esclave (102) et le dispositif maître (101), sur la base d'une différence de temps entre la cinquième différence d'horloge et la sixième différence d'horloge ; et déterminer la différence d'horloge maîtresse, sur la base d'une moyenne de la première différence d'horloge, de la septième différence d'horloge et de la différence d'horloge maîtresse indirecte ; et
déterminer une différence d'horloge esclave indirecte entre le premier dispositif esclave (102) et le second dispositif esclave (103), sur la base d'une différence entre la première différence d'horloge et la quatrième différence d'horloge ; et déterminer la différence d'horloge esclave, sur la base d'une moyenne de la sixième différence d'horloge, de la huitième différence d'horloge et de la différence d'horloge esclave indirecte.

15. Système de synchronisation d'horloge selon la revendication 10, dans lequel, après l'envoi des deuxièmes signaux à impulsions adjacents au second dispositif esclave (103), le premier dispositif esclave (102) est en outre configuré pour :
recevoir des septièmes signaux à impulsions adjacents envoyés par le second dispositif esclave (103) ;
déterminer une neuvième différence d'horloge entre le premier dispositif esclave (102) et le second dispositif esclave (103), sur la base des septièmes signaux à impulsions adjacents reçus ; et
envoyer la neuvième différence d'horloge au second dispositif esclave (103) ; et
le second dispositif esclave (103) est en outre configuré pour ajuster un paramètre d'horloge en fonction d'une moyenne de la deuxième différence d'horloge et de la neuvième différence d'horloge.
